# EUROPÄISCHE PATENTSCHRIFT

(11) **EP 3 990 349 B1**
(45) Veröffentlichungstag und Bekanntmachung des Hinweises auf die Patenterteilung: **02.12.2026**
(21) Anmeldenummer: 20736280.7
(22) Anmeldetag: 26.06.2020
(51) Int. Cl.: B64D 11/00, B64D 11/06

(54) **FLUGZEUGKABINENVORRICHTUNG**
AIRCRAFT CABIN DEVICE
DISPOSITIF DE CABINE D'AVION

(30) Priorität: 27.06.2019 DE 102019117420
(43) Veröffentlichungstag der Anmeldung: 04.05.2022
(73) Patentinhaber: Recaro Aircraft Seating GmbH & Co. KG, 74523 Schwäbisch Hall (DE)
(72) Erfinder: SCHÜRG, Christoph, 74523 Schwäbisch Hall (DE); HASEGAWA, Satoshi, 74076 Heilbronn (DE); CHILCOTT, Christopher, 74523 Schwäbisch Hall (DE)
(74) Vertreter: Daub, Thomas
(86) Internationale Anmeldenummer: PCT/EP2020/068112
(87) Internationale Veröffentlichungsnummer: WO 2020/260642

(56) Entgegenhaltungen:
- EP-A1- 3 305 662
- DE-A1- 102007 007 573
- US-A- 3 762 764
- US-A- 5 344 212
- US-A1- 2012 025 018
- US-A1- 2013 248 655
- US-A1- 2018 281 964

## Beschreibung

### Stand der Technik

Die Erfindung betrifft eine Flugzeugkabinenvorrichtung nach dem Patentanspruch 1.

Es ist bereits eine Flugzeugkabinenvorrichtung mit wenigstens einer ersten Flugzeugsitzreihe, die zumindest zwei Flugzeugsitze aufweist, die in eine gleiche Sitzrichtung ausgerichtet sind, mit einer unmittelbar vor der ersten Flugzeugsitzreihe angeordneten Trennwand, vorgeschlagen worden.

US 5,344,212 A offenbart eine Kindersitzanordnung in einer Flugzeugkabine, bei der ein Kindersitz gegenüber einem Erwachsenensitz angeordnet und mittels eines Adapters im Bereich einer Kabinentrennwand befestigt ist. EP 3 305 662 A1 offenbart eine Flugzeugkabinenvorrichtung für Passagiere mit einer dedizierten Passagiersitzklasse, die von einer nicht dedizierten Passagiersitzklasse getrennt ist und mit Ausstattungen versehen ist, die auf die Bedürfnisse eines Säuglings oder eines Haustiers abgestimmt sind. US 2012/025018 A1 offenbart einen Klassentrenner für ein Passagierfahrzeug. US 3,762,764 A offenbart einen Klappsitz zur Verwendung in einem Transportfahrzeug. DE 10 2007 007573 A1 offenbart einen Kindersitz zur Verwendung in einem Flugzeug mit einer Sitzflächenvorrichtung und einer Stützvorrichtung, wobei die Sitzflächenvorrichtung und die Stützvorrichtung in einer Stellung an einer Wandfläche anliegen und in einer anderen Stellung die Sitzflächenvorrichtung in einer Sitzebene und die Stützvorrichtung in einer Stützposition angeordnet ist. US 2013/248655 A1 offenbart eine Flugzeug-Passagiersuite mit einem Aufenthaltsbereich, dessen Länge wesentlich geringer ist als die Länge eines Sitzbereichs, so dass sich die Suite in Längsrichtung mit einer anderen Suite überlappt, wobei ein Zugang zur Suite durch eine Unterbrechung von Trennwänden definiert ist. US 2018/281964 A1 offenbart eine Sitzanordnung für ein Flugzeug mit einem Trennschirm, der zwischen Sitzbereichen angeordnet ist und entlang eines gemeinsamen Bodenbereichs zwischen einer verstauten Stellung, die einen Durchgang für Passagiere ermöglicht, und einer ausgefahrenen Stellung, die den Durchgang blockiert, verschiebbar ist.

Die Aufgabe der Erfindung besteht insbesondere darin, eine gattungsgemäße Vorrichtung mit verbesserten Eigenschaften hinsichtlich eines Komforts und einer Variabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugkabinenvorrichtung mit wenigstens einer ersten Flugzeugsitzreihe, die zumindest drei unmittelbar nebeneinander und parallel zueinander ausgerichtete Flugzeugsitze aufweist, die in eine gleiche Sitzrichtung ausgerichtet sind, mit einer unmittelbar vor der ersten Flugzeugsitzreihe angeordneten Trennwand.

Die Flugzeugkabinenvorrichtung bildet wenigstens einen Aufenthaltsbereich aus, der zumindest teilweise an der Trennwand angeordnet ist und wenigstens ein Sitzelement aufweist, das dazu vorgesehen ist, einen Sitzplatz für mindestens einen Passagier auszubilden. Unter einer "Flugzeugkabinenvorrichtung" soll vorzugsweise insbesondere eine Vorrichtung verstanden werden, die zumindest in einem Teil einer Flugzeugkabine angeordnet ist und/oder einen Teil einer Flugzeugkabine ausbildet. Unter einer "Flugzeugsitzreihe" soll eine Reihe aus zumindest drei unmittelbar nebeneinander angeordneten Flugzeugsitzen, die parallel zueinander ausgerichtet sind, also deren Sitzrichtungen parallel zueinander ausgerichtet sind, verstanden werden. Vorzugsweise sind die Flugzeugsitze einer Flugzeugsitzreihe über eine gemeinsame Aufständereinheit auf einem Kabinenboden aufständerbar. Vorzugsweise ist die Flugzeugsitzreihe als eine Frontflugzeugsitzreihe ausgebildet. Vorzugsweise ist die Flugzeugsitzreihe insbesondere als eine vorderste Flugzeugsitzreihe einer Kolonne von Flugzeugsitzreihen ausgebildet. Die vorderste Flugzeugsitzreihe ist vorzugsweise insbesondere dadurch gekennzeichnet, dass keine weitere Flugzeugsitzreihe unmittelbar vor ihr angeordnet ist. Vorzugsweise ist vor der vordersten Flugzeugsitzreihe einer Kolonne von Flugzeugsitzreihen in einem definierten Abstand eine Trennwand angeordnet. Ein Abstand, in dem die Trennwand vor der Flugzeugsitzreihe angeordnet ist, entspricht vorzugsweise zumindest dem Abstand zwischen zwei Flugzeugsitzreihen der Kolonne. Unter einer "Sitzrichtung" soll insbesondere eine Richtung verstanden werden, welche parallel zu dem Kabinenboden und zumindest im Wesentlichen senkrecht zu einer von der Rückenlehne gebildeten Rückenlehnenfläche ausgerichtet ist. Unter einer "Trennwand" soll insbesondere eine Wandung verstanden werden, die in einen Innenraum der Flugzeugkabine hineinragt, und vorzugsweise insbesondere unterschiedliche Bereiche der Flugzeugkabine zumindest teilweise voneinander abtrennt. Vorzugsweise kann es sich bei der Trennwand um eine vorne im Flugzeug angeordnete Bordwand handeln, oder um eine im weiteren Verlauf der Flugzeugkabine angeordnete Trennwand. Eine Trennwand kann insbesondere eine Abtrennung zu einem Toiletten- oder Bordküchenbereich in der Flugzeugkabine darstellen oder eine Abtrennung zwischen zwei Passagierklassen in der Flugzeugkabine. Unter "unmittelbar davor angeordnet" soll insbesondere verstanden werden, dass insbesondere keine weitere Flugzeugsitzreihe dazwischen, insbesondere zwischen der vorne angeordneten Flugzeugsitzreihe und der Trennwand angeordnet ist. Unter einem "Aufenthaltsbereich" soll insbesondere ein Bereich verstanden werden, der insbesondere dazu vorgesehen ist, dass sich ein Passagier, ein Erwachsener und/oder ein Kind, zumindest während einer Normalflugphase darin aufhalten kann. Vorzugsweise ist der Aufenthaltsbereich insbesondere als ein Bereich vorgesehen, in dem sich Passagiere aufhalten können und dürfen, nicht ausschließlich Crewmitglieder. Der Aufenthaltsbereich kann dabei insbesondere spezielle für den Aufenthalt von Passagieren vorgesehene Elemente aufweisen, die einen Komfort und/oder eine Funktionalität des Aufenthaltsbereichs erhöhen. Der Aufenthaltsbereich kann vorzugsweise als ein Kinderbereich, als ein Businessbereich oder als ein speziell für Passagiere mit einer Behinderung ausgebildeter, behindertengerechter Passagierbereich ausgebildet sein. Unter einem "Sitzelement" soll insbesondere ein Element verstanden werden, das zumindest in einer Stellung eine Sitzfläche für einen Passagier bereitstellt, auf der ein Passagier insbesondere während eines Normalflugbetriebs sitzen kann. Das Sitzelement kann lediglich einen Sitzbereich für einen Passagier ausbilden. Vorzugsweise bildet das Sitzelement einen Sitzbereich aus, der vorzugsweise für zumindest zwei Passagiere zeitgleich eine Sitzmöglichkeit ausbildet. Vorzugsweise ist das Sitzelement dazu vorgesehen, dass ein Erwachsener Passagier und/oder ein Kind auf dem Sitzelement aufrecht sitzen kann. Unter einem "Sitzelement für einen Passagier" soll insbesondere verstanden werden, dass das Sitzelement insbesondere für einen Passagier des Flugzeugs vorgesehen ist, und insbesondere kein für ein Crewmitglied vorgesehenes Sitzelement ausbildet, das beispielsweise bei Start- und Landung von einem Crewmitglied eingenommen wird. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft ein Bereich vor der vordersten Flugzeugsitzreihe des entsprechenden Sitzbereichs ausgebildet werden, der vorteilhaft von zumindest einem erwachsenen Passagier oder zumindest einem Kind während eines Fluges als Aufenthaltsraum genutzt werden kann. Dadurch kann ein besonders vorteilhaftes Angebot für Flugreisende geschaffen werden.

Weiter wird vorgeschlagen, dass der Aufenthaltsbereich als ein Kinderbereich ausgebildet ist. Unter einem "Kinderbereich" soll insbesondere ein Bereich verstanden werden, der insbesondere für die Bedürfnisse eines Kindes, vorzugsweise insbesondere für ein Kind in einem Alter von 0 bis 12 Jahren ausgebildet ist. Vorzugsweise ist insbesondere eine Größe der entsprechenden Elemente des als Kinderbereich ausgebildeten Aufenthaltsbereichs auf entsprechende durchschnittliche Kinder angepasst. Dadurch kann an der vorderen Sitzreihe vorzugsweise ein Bereich für eine Familie geschaffen werden, in dem die Kinder nahe bei den Eltern während des Flugs Beschäftigung finden können.

Das Sitzelement ist als Bankelement ausgebildet. Unter einem "Bankelement" soll insbesondere ein Element verstanden werden, das eine Breite aufweist, die sich über einen Großteil der Flugzeugsitzreihe, vorzugsweise über die gesamte Flugzeugsitzreihe erstreckt und mehrere Sitzbereiche nebeneinander ausbildet. Das Bankelement kann vorzugsweise starr und unveränderlich mit dem Wandelement verbunden sein oder mittels einer Lagervorrichtung zwischen zumindest einer Verstaustellung und einer Gebrauchsstellung verstellbar sein. Vorzugsweise ist es insbesondere denkbar, dass das Bankelement über eine Schwenkbewegung, eine Linearbewegung oder eine Kombination aus einer Linear- und Schwenkbewegung zwischen seiner Verstaustellung und seiner Gebrauchsstellung verstellbar ist. Grundsätzlich ist es vorzugsweise insbesondere auch denkbar, dass das Bankelement mehrteilig ausgebildet ist. Insbesondere ist es denkbar, dass das Bankelement aus mehreren nebeneinander angeordneten Einzelsitzelementen ausgebildet ist, die beabstandet zueinander angeordnet sind, wobei vor jedem Flugzeugsitz der Flugzeugsitzreihe ein Einzelsitzelement angeordnet ist. Dadurch kann eine besonders vorteilhaft breite und einfache Sitzmöglichkeit für den Aufenthaltsbereich geschaffen werden.

Es wird weiterhin vorgeschlagen, dass der als Kinderbereich ausgebildete Aufenthaltsbereich wenigstens ein Spielgerät umfasst, das zumindest teilweise in die Trennwand integriert ist. Unter einem "Spielgerät" soll insbesondere ein Gerät oder eine Vorrichtung verstanden werden, die insbesondere zur Benutzung durch ein Kind vorgesehen ist. Ein Spielgerät ist vorzugsweise insbesondere als ein Gerät oder eine Vorrichtung ausgebildet, mit der ein Kind spielen kann. Beispielsweise ist das Spielgerät als eine Maltafel, als ein Wandpuzzle oder als ein elektronisches Spielgerät ausgebildet. Unter "zumindest teilweise integriert" soll insbesondere verstanden werden, dass zumindest ein Teil des Spielgeräts an der Trennwand angeordnet bzw. fixiert ist oder von der Trennwand zumindest teilweise ausgebildet wird. Dadurch kann der als Kinderbereich ausgebildete Aufenthaltsbereich besonders vorteilhaft für Kinder ausgebildet werden. Des Weiteren wird vorgeschlagen, dass der Aufenthaltsbereich eine Tischvorrichtung mit wenigstens einem Tischelement umfasst, das zwischen einer Verstaustellung und zumindest einer Gebrauchsstellung verstellbar ist. Unter einer "Tischvorrichtung" soll insbesondere eine Vorrichtung verstanden werden, die zumindest in einer Gebrauchsstellung eine Tischauflagefläche ausbildet, auf die ein Passagier, vorzugsweise insbesondere ein Passagier, der sich in dem Aufenthaltsbereich aufhält, Gegenstände ablegen kann. Die Tischvorrichtung umfasst vorzugsweise wenigstens ein Tischelement, das die Tischauflagefläche zumindest in einer Gebrauchsstellung zumindest teilweise ausbildet. Unter einem "Tischelement" soll insbesondere ein plattenartiges Element verstanden werden, das dazu vorgesehen ist, die Tischoberfläche auszubilden. Grundsätzlich ist es dabei denkbar, dass das Tischelement einen, vorzugsweise vollständig umlaufenden, erhöhten Rand aufweist, der ein Herabrutschen von auf dem Tischelement angeordneten Gegenständen vorteilhaft verhindern kann. Vorzugsweise ist es denkbar, dass der Rand flexibel ausgebildet ist und insbesondere bei einer gewissen auf ihn ausgeübten Kraft nachgibt. Vorzugsweise ist das Tischelement als eine Tischplatte ausgebildet. Unter einer "Verstaustellung" soll dabei insbesondere eine Stellung der Tischvorrichtung verstanden werden, in der die Tischvorrichtung nicht dazu vorgesehen ist, zur Ablage von Gegenständen benutzt zu werden. In der Verstaustellung ist die Tischvorrichtung, vorzugsweise das wenigstens eine Tischelement der Tischvorrichtung an eine Außenfläche, beispielsweise der Trennwand oder des Bankelements angeklappt oder in einem Gehäuse eingefahren. Unter einer "Gebrauchsstellung" soll insbesondere eine Stellung der Tischvorrichtung verstanden werden, in der die Tischvorrichtung dazu vorgesehen ist, zur Ablage von Gegenständen benutzt zu werden. In der Gebrauchsstellung ist vorzugsweise das zumindest eine Tischelement im Wesentlichen parallel zu dem Kabinenboden ausgerichtet und bildet eine im Wesentlichen ebene Tischoberfläche aus. Vorzugsweise kann es dabei insbesondere denkbar sein, dass das Tischelement einen Winkel von 3 Grad zu dem Kabinenboden aufweist, um insbesondere eine Neigung des Flugzeugs während eines Flugbetriebs auszugleichen. Dadurch kann der Aufenthaltsbereich besonders vorteilhaft durch eine Ablagefläche erweitert werden, die bei Nichtgebrauch vorteilhaft verstaut werden kann.

Weiterhin wird vorgeschlagen, dass die Tischvorrichtung wenigstens eine Lagervorrichtung aufweist, mittels der das Tischelement zwischen seiner unter dem Sitzelement angeordneten Verstaustellung und einer vor dem Sitzelement angeordneten Gebrauchsstellung verstellbar, insbesondere verschwenkbar ist. Unter einer "Lagervorrichtung" soll insbesondere eine Vorrichtung aus wenigstens einem Lagerelement verstanden werden, das dazu vorgesehen ist, zwischen den beiden Stellungen beweglich zu lagern und dazu zumindest ein Rotationslager und/oder ein Linearlager umfasst. Dadurch kann die Tischvorrichtung besonders vorteilhaft in dem Aufenthaltsbereich angebunden werden.

Außerdem wird vorgeschlagen, dass das Tischelement in zumindest einer Gebrauchsstellung von zumindest einem Flugzeugsitz der ersten Flugzeugsitzreihe benutzbar ist. Dadurch kann die vordere Flugzeugsitzreihe vorzugsweise ohne zusätzliches Tischelement ausgebildet werden, wodurch insbesondere eine Gewichtsersparnis erreicht werden kann.

Zudem wird vorgeschlagen, dass der Aufenthaltsbereich zumindest ein an der Trennwand angeordnetes Befestigungsmittel umfasst, mittels dem persönliche Gegenstände im Bereich der Trennwand verliersicher angebracht werden können. Unter einem "Befestigungsmittel" soll dabei insbesondere ein Element oder Mittel verstanden werden, das dazu vorgesehen ist, in dem Aufenthaltsbereich, vorzugsweise insbesondere an der Trennwand befestigt zu werden und dabei weitere Gegenstände, wie insbesondere persönliche Gegenstände in dem Aufenthaltsbereich, insbesondere an der Trennwand zumindest temporär zu befestigen. Dabei ist ein Befestigungsmittel insbesondere als ein zumindest teilweise elastisches Band ausgebildet, wobei das Befestigungsmittel stark elastisch verformbar oder nur minimal elastisch verformbar ausgebildet sein kann. Dabei soll unter "stark elastisch verformbar" eine mögliche elastische Längenveränderung von 20% bis 40% verstanden werden. Unter "minimal elastisch verformbar" soll dabei eine maximal mögliche elastische Längenveränderung von 1% bis 5% verstanden werden. Grundsätzlich ist es auch denkbar, dass ein Befestigungsmittel als eine Tasche oder ein Netz ausgebildet ist, wobei die zu befestigenden Elemente in einen von der Tasche oder dem Netz aufgespannten Raum zwischen der Tasche oder dem Netz und der Trennwand eingeklemmt werden können. Unter einem "persönlichen Gegenstand" soll dabei insbesondere ein einem sich in dem Aufenthaltsbereich aufhaltenden Passagier zugeordneter Gegenstand verstanden werden, wie beispielsweise ein Kissen, ein Spielzeug, wie beispielsweise ein Kuscheltier, ein Kleidungsstück, wie beispielsweise eine Jacke oder ein Pullover, eine Decke oder ein anderer, dem Fachmann als sinnvoll erscheinender persönlicher Gegenstand. Dabei ist es sowohl denkbar, dass der persönliche Gegenstand von dem Passagier selbst mitgebracht ist oder dass der persönliche Gegenstand von einer den Aufenthaltsbereich bereitstellenden Gesellschaft, wie insbesondere einer Airline, einem Passagier speziell für dessen Gebrauch ausgehändigt wurde. Dadurch kann der Aufenthaltsbereich besonders vorteilhaft mit einer einfachen und intuitiven Möglichkeit zum Anbringen von persönlichen Gegenständen ausgestattet werden.

Weiter wird vorgeschlagen, dass der Aufenthaltsbereich zumindest ein Verstaufach aufweist, das in dem Sitzelement angeordnet ist. Unter einem "Verstaufach" soll insbesondere ein Fach verstanden werden, in dem Utensilien, wie vorzugsweise insbesondere persönliche Gegenstände von Passagieren verliersicher verstaut werden können. Vorzugsweise weist das Verstaufach einen Innenraum auf, der mittels einem verschließbaren Türelement verschlossen werden kann. Grundsätzlich ist es auch denkbar, dass ein Verstaufach als ein zumindest teilweise permanent geöffnetes Fach ausgebildet ist, das kein verschließbares Türelement aufweist. Dadurch kann der Aufenthaltsbereich besonders vorteilhaft mit einer Aufbewahrungsmöglichkeit ausgebildet werden.

Ferner wird vorgeschlagen, dass die Flugzeugkabinenvorrichtung zumindest ein verstellbares Fußablageelement aufweist, das für zumindest einen Flugzeugsitz der Flugzeugsitzreihe vorgesehen ist und unterhalb des Sitzelements des Aufenthaltsbereichs angeordnet ist. Unter einem "Fußablageelement" soll insbesondere ein Element verstanden werden, das zumindest in einer Stellung dazu vorgesehen ist, einen Abstellbereich für einen Fuß und/oder einen Teil eines Beins bereitzustellen. Dadurch kann vorteilhaft ein Fußablagebereich für die vordere Flugzeugsitzreihe ausgebildet werden.

Es wird weiterhin vorgeschlagen, dass die Flugzeugkabinenvorrichtung zumindest eine Bildschirmeinheit aufweist, die oberhalb des Aufenthaltsbereichs in die Trennwand integriert ist. Dadurch kann für die vordere Flugzeugsitzreihe vorteilhaft einfach zumindest eine Bildschirmeinheit bereitgestellt werden.

Der Aufenthaltsbereich weist zumindest ein Trennelement auf, das dazu vorgesehen ist, den Aufenthaltsbereich zumindest teilweise zu begrenzen. Unter einem "Trennelement" soll vorzugsweise ein Element verstanden werden, das dazu vorgesehen ist, zumindest zwei Teilbereiche voneinander abzutrennen. Vorzugsweise ist das Trennelement insbesondere dazu vorgesehen, den Aufenthaltsbereich zumindest teilweise von einem Rest der Flugzeugkabine abzutrennen.

Das Trennelement ist dazu vorgesehen, den Aufenthaltsbereich in Richtung des Kabinengangs, in Richtung der Bordwand und/oder in Richtung der Flugzeugsitzreihe zu begrenzen. Vorzugsweise ist durch das Trennelement ein Durchgang für ein Kind unterhalb der Flugzeugsitze der ersten Flugzeugsitzreihe und/oder ein Durchgang in den Kabinengang versperrt. Das Trennelement ist vorzugsweise von einer Platte gebildet. Vorzugsweise weist das Trennelement eine Polsterung, beispielsweise in Form eines Schaumstoffs, auf. Grundsätzlich ist es auch denkbar, dass das Trennelement von einer Bespannung gebildet ist, also insbesondere von einem Textil, das an einer Stelle aufgespannt wird, in dem es zwei Teilbereiche voneinander abtrennen soll. Unter "zumindest teilweise zu begrenzen" soll insbesondere verstanden werden, dass das Trennelement den Aufenthaltsbereich zumindest in einem Bereich und insbesondere bis zu einer definierten Höhe begrenzt. Vorzugsweise ist es insbesondere denkbar, dass das Trennelement den Aufenthaltsbereich in zumindest einer Richtung, beispielsweise in Richtung des Kabinengangs, der ersten Flugzeugsitzreihe und/oder in Richtung der Bordwand bis in eine definierte Höhe komplett abgrenzt. Dadurch kann der Aufenthaltsbereich vorzugsweise insbesondere so abgetrennt werden, dass Kinder den Aufenthaltsbereich nicht ohne Weiteres verlassen können oder sich an Gegenständen in der Umgebung des Aufenthaltsbereichs verletzen können, wodurch insbesondere eine Sicherheit erhöht werden kann.

Ferner wird vorgeschlagen, dass das Trennelement gepolstert ausgebildet ist. Unter "gepolstert ausgebildet" soll insbesondere verstanden werden, dass das Trennelement eine weiche und/oder elastische Oberfläche aufweist, die beispielsweise durch ein Polster aus einem Schaumstoff und/oder einem Kunststoff oder eine Bespannung gebildet ist. Dadurch kann das Trennelement besonders vorteilhaft ausgebildet werden.

Die erfindungsgemäße Flugzeugkabinenvorrichtung soll hierbei nicht auf die oben beschriebene Anwendung und Ausführungsform beschränkt sein. Insbesondere kann die erfindungsgemäße Flugzeugkabinenvorrichtung zu einer Erfüllung einer hierin beschriebenen Funktionsweise eine von einer hierin genannten Anzahl von einzelnen Elementen, Bauteilen und Einheiten abweichende Anzahl aufweisen, soweit sie in den Schutzbereich der beigefügten Ansprüche fällt.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, soweit diese in den Schutzbereich der Ansprüche fallen.

Es zeigen:
- Fig. 1: eine schematische Darstellung eines Teils einer Flugzeugkabine mit einer erfindungsgemäßen Flugzeugkabinenvorrichtung in einem ersten Ausführungsbeispiel,
- Fig. 2: eine weitere Ausführung der Flugzeugkabinenvorrichtung mit einem als Kinderbereich ausgebildeten Aufenthaltsbereich mit einem ausgeklappten Sitzelement,
- Fig. 3: eine schematische Darstellung eines Teils einer Flugzeugkabine mit einer erfindungsgemäßen Flugzeugkabinenvorrichtung in einem zweiten Ausführungsbeispiel,
- Fig. 4: eine schematische Darstellung eines Teils einer Flugzeugkabine mit einer erfindungsgemäßen Flugzeugkabinenvorrichtung in einem dritten Ausführungsbeispiel und
- Fig. 5: eine schematische Darstellung eines Teils einer Flugzeugkabine mit einer erfindungsgemäßen Flugzeugkabinenvorrichtung in einem vierten Ausführungsbeispiel.

### Beschreibung der Ausführungsbeispiele

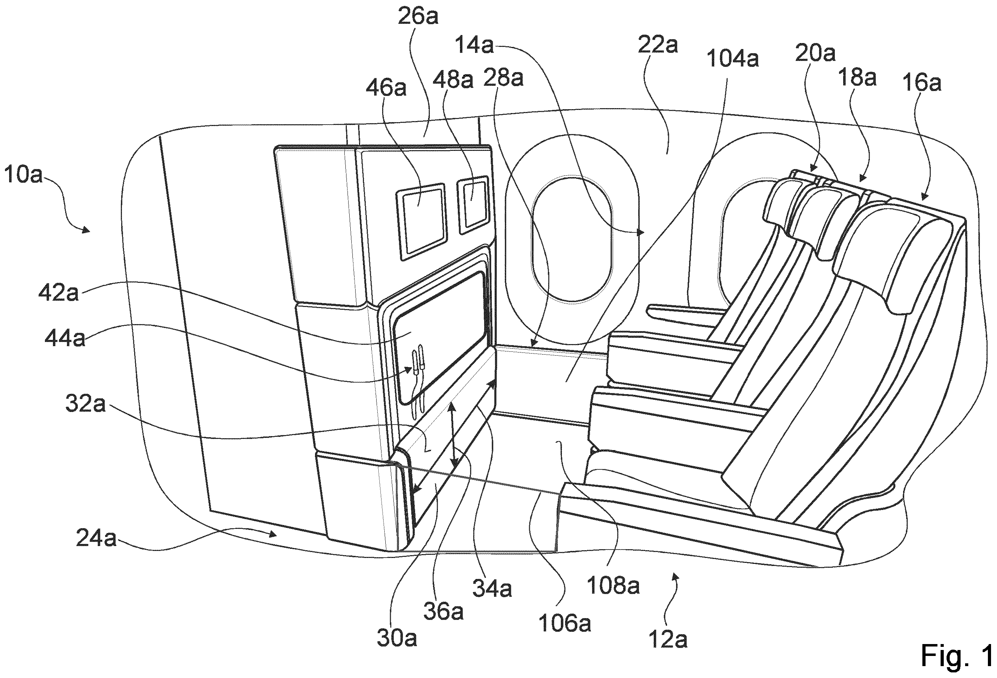

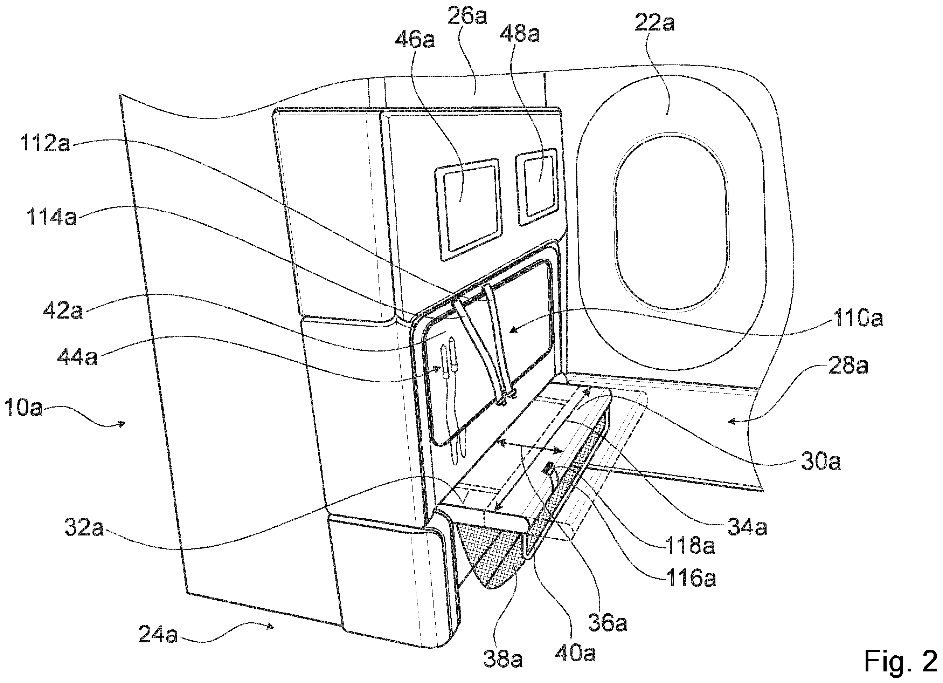

Die Figuren 1 und 2 zeigen ein erstes Ausführungsbeispiel einer erfindungsgemäßen Flugzeugkabinenvorrichtung. Die Flugzeugkabinenvorrichtung ist als Teil einer Flugzeugkabine 10a ausgebildet. Die Flugzeugkabinenvorrichtung weist eine erste Flugzeugsitzreihe 12a auf. Die Flugzeugsitzreihe 12a ist als Teil einer Kolonne 14a von hintereinander angeordneten Flugzeugsitzreihen 12a ausgebildet. Die Flugzeugsitzreihe 12a ist als eine vorderste Flugzeugsitzreihe 12a ausgebildet. Die Flugzeugsitzreihe 12a ist insbesondere als eine Frontflugzeugsitzreihe 12a ausgebildet. Die erste Flugzeugsitzreihe 12a ist als eine vorderste Reihe der Kolonne 14a ausgebildet. Alle Flugzeugsitzreihen 12a der Kolonne 14a sind hinter der ersten Flugzeugsitzreihe 12a angeordnet. Insbesondere ist keine weitere Flugzeugsitzreihe unmittelbar vor der ersten Flugzeugsitzreihe 12a angeordnet. Die erste Flugzeugsitzreihe 12a umfasst drei Flugzeugsitze 16a, 18a, 20a. Grundsätzlich ist es auch denkbar, dass die Flugzeugsitzreihe 12a mehr als drei Flugzeugsitze 16a, 18a, 20a umfasst. Die Flugzeugsitzreihe 12a ist hier beispielhaft bordwandseitig ausgebildet. Die Flugzeugsitzreihe 12a ist zwischen einer seitlichen Bordwand 22a und einem Kabinengang 24a der Flugzeugkabine 10a angeordnet. Grundsätzlich ist es auch denkbar, dass die Flugzeugsitzreihe 12a als eine Mittelsitzreihe ausgebildet ist, die zwischen zwei Kabinengängen 24a angeordnet ist. Die Flugzeugsitze 16a, 18a, 20a sind als Economy-Class Flugzeugsitze ausgebildet. Grundsätzlich ist es auch denkbar, dass die Flugzeugsitze 16a, 18a, 20a als Premium-Economy-Class Flugzeugsitze ausgebildet sind. Die Flugzeugsitze 16a, 18a, 20a weisen jeweils einen Sitzboden und eine zu dem Sitzboden verschwenkbare Rückenlehne auf. Die Sitzböden und die Rückenlehnen der Flugzeugsitze 16a, 18a, 20a sind vorzugsweise mittels einer Aufständereinheit auf einem Kabinenboden der Flugzeugkabine 10a aufgeständert. Die Flugzeugsitze 16a, 18a, 20a sind vorzugsweise unabhängig voneinander jeweils zwischen einer aufrechten Sitzposition und einer Komfortposition verstellbar. In einer Komfortposition ist die Rückenlehne eines Flugzeugsitzes 16a, 18a, 20a vorzugsweise nach hintern verschwenkt. Grundsätzlich ist es auch denkbar, dass die Rückenlehnen der Flugzeugsitze 16a, 18a, 20a starr und nicht verstellbar ausgebildet sind. Die Flugzeugsitze 16a, 18a, 20a der Flugzeugsitzreihe 12a weisen jeweils eine gleiche Sitzrichtung auf. Die Sitzrichtungen der Flugzeugsitze 16a, 18a, 20a der Flugzeugsitzreihe 12a verlaufen insbesondere parallel zueinander. Die Flugzeugsitze 16a, 18a, 20a der Flugzeugsitzreihe 12a sind in der Flugzeugkabine 10a insbesondere gleich ausgerichtet.

Die Flugzeugkabinenvorrichtung umfasst eine Trennwand 26a. Die Trennwand 26a ist insbesondere unmittelbar vor der ersten Flugzeugsitzreihe 12a angeordnet. Die Flugzeugsitze 16a, 18a, 20a der Flugzeugsitzreihe 12a sind insbesondere auf die Trennwand 26a ausgerichtet. Die Trennwand 26a ragt seitlich von der Bordwand 22a bis zu dem Kabinengang 24a in die Flugzeugkabine 10a hinein. Die Trennwand 26a erstreckt sich vorzugsweise von dem Kabinenboden bis an eine Kabinendecke der Flugzeugkabine 10a. Grundsätzlich ist es auch denkbar, dass die Trennwand 26a eine geringere Höhe aufweist. Die Trennwand 26a kann vorzugsweise insbesondere als eine Frontwand ausgebildet sein, die den Passagierkabinenbereich an einem vorderen Ende des Flugzeugs begrenzt, oder als eine Wand, die Teilbereiche der Flugzeugkabine 10a voneinander abtrennt. Beispielsweise kann die Trennwand 26a als Teil eines Bordküchenbereichs oder eines Bordtoilettenbereichs ausgebildet sein. Ist die Flugzeugsitzreihe 12a als eine Mittelsitzreihe ausgebildet, die sich zwischen zwei Kabinengängen 24a erstreckt, so erstreckt sich die entsprechende Trennwand 26a ebenfalls zwischen den zwei Kabinengängen 24a. Die Trennwand 26a weist vorzugsweise insbesondere eine Breite auf, die in etwa der Breite der Flugzeugsitzreihe 12a entspricht. Vorzugsweise weist die Trennwand 26a eine Breite auf, die einer Breite der Flugzeugsitzreihe 12a entspricht, vor der die Trennwand 26a unmittelbar angeordnet ist. Die Trennwand 26a ist beabstandet zu der ersten Flugzeugsitzreihe 12a angeordnet. Die Trennwand 26a ist beabstandet vor der ersten Flugzeugsitzreihe 12a angeordnet. Die Trennwand 26a ist vorzugsweise zumindest 50 cm vor der ersten Flugzeugsitzreihe 12a angeordnet. Die Trennwand 26a weist vorzugsweise insbesondere einen Abstand von der vorderen Flugzeugsitzreihe 12a auf, die einem Abstand zwischen zwei Flugzeugsitzreihen 12a der Kolonne 14a entspricht. Der Abstand zwischen der Trennwand 26a und der Flugzeugsitzreihe 12a wird vorzugsweise insbesondere von einem vorderen Ende der Sitzböden der Flugzeugsitze 16a, 18a, 20a in Sitzrichtung bis an die Trennwand 26a gemessen. Der Abstand zwischen der Trennwand 26a und der Flugzeugsitzreihe 12a beträgt vorzugsweise 40 bis 120 cm.

Die Flugzeugkabinenvorrichtung umfasst einen Aufenthaltsbereich 28a. Der Aufenthaltsbereich 28a ist als ein Aufenthaltsbereich 28a für wenigstens einen Passagier, insbesondere während eines Fluges vorgesehen. Der Aufenthaltsbereich 28a ist insbesondere zwischen der vordersten Flugzeugsitzreihe 12a und der Trennwand 26a angeordnet. Der Aufenthaltsbereich 28a ist vorzugsweise insbesondere teilweise von der Trennwand 26a ausgebildet. Der Aufenthaltsbereich 28a ist insbesondere als ein Kinderbereich ausgebildet. Der Aufenthaltsbereich 28a ist insbesondere dazu vorgesehen, dass sich Kinder während eines Fluges darin aufhalten können. Der Aufenthaltsbereich 28a bildet vorzugsweise insbesondere zusammen mit zumindest einem Flugzeugsitz 16a, 18a, 20a der Flugzeugsitzreihe 12a einen Familienbereich aus, in dem eine Familie mit zumindest einem Kind zusammen reisen kann. Der als Kinderbereich ausgebildete Aufenthaltsbereich 28a ist insbesondere dazu vorgesehen, dass sich zumindest ein Kind in der Nähe von zumindest einer, insbesondere einer auf einem der Flugzeugsitze 16a, 18a, 20a der ersten Flugzeugsitzreihe 12a sitzenden Begleitperson während eines Fluges aufhalten kann.

Der Aufenthaltsbereich 28a weist ein Sitzelement 30a auf. Das Sitzelement 30a ist dazu vorgesehen, in zumindest einer Stellung einen Sitzplatz für einen Passagier bereitzustellen. Das Sitzelement 30a des als Kinderbereich ausgebildeten Aufenthaltsbereichs 28a ist vorzugsweise insbesondere dazu vorgesehen, einen Sitzplatz für zumindest ein Kind auszubilden. Insbesondere ist das Sitzelement 30a dazu vorgesehen, einen Sitzplatz für ein Kind in einem Alter von etwa 0 bis 13 Jahren bereitzustellen. Das Sitzelement 30a ist an der Trennwand 26a angeordnet. Das Sitzelement 30a ist vorzugsweise an die Trennwand 26a fest angebunden. Gewichtskräfte, die durch ein Sitzen einer Person auf das Sitzelement 30a wirken, werden vorzugsweise über die Trennwand 26a abgeleitet. Grundsätzlich ist es auch denkbar, dass zumindest ein Teil der Gewichtskräfte über spezielle Abstützelemente direkt in den Kabinenboden abgeleitet werden können. Das Sitzelement 30a ist vorzugsweise als ein Bankelement ausgebildet. Das Sitzelement 30a ist insbesondere als ein schwenkbares Bankelement ausgebildet, das zwischen einer Verstaustellung und einer Gebrauchsstellung verschwenkbar an der Trennwand 26a angebunden ist. Das als Bankelement ausgebildete Sitzelement 30a ist mittels einer Schwenklagerung fest mit der Trennwand 26a verbunden. Das Sitzelement 30a ist in seiner Verstaustellung an die Trennwand 26a angeklappt. In der Verstaustellung ist eine Sitzfläche 32a des Sitzelements 30a im Wesentlichen parallel zu der Trennwand 26a ausgerichtet. Vorzugsweise ist das Sitzelement 30a in seiner Verstaustellung über eine nicht näher dargestellte Verriegeleinheit an der Trennwand 26a gesichert, um insbesondere ein ungewolltes Verschwenken aus der Verstaustellung heraus zu verhindern. In der Gebrauchsstellung ist das als Bankelement ausgebildete Sitzelement 30a von der Trennwand 26a weg geschwenkt. In der Gebrauchsstellung ist die Sitzfläche 32a des Sitzelements 30a in etwa orthogonal zu der Trennwand 26a ausgerichtet. In der Gebrauchsstellung bildet das Sitzelement 30a mit seiner Sitzfläche 32a eine im Wesentlichen parallel zu dem Kabinenboden ausgerichtete Sitzfläche für einen Passagier aus. Das Sitzelement 30a ist über eine nicht näher dargestellte Verriegeleinheit in der Gebrauchsstellung gesichert. Über die Verriegeleinheit können vorzugsweise insbesondere Gewichtskräfte, die auf das Sitzelement 30a wirken, in die Trennwand 26a und/oder in den Kabinenboden eingeleitet werden.

Das Sitzelement 30a weist eine Sitzbreite 34a auf, die vorzugsweise zumindest einem Passagier Platz zum Sitzen gibt. Die Sitzbreite 34a des Sitzelements 30a entspricht vorzugsweise in etwa der Breite der Flugzeugsitzreihe 12a. Das Sitzelement 30a erstreckt sich vorzugsweise über die gesamte Breite der Flugzeugsitzreihe 12a. Grundsätzlich ist es ebenso denkbar, dass sich das Sitzelement 30a lediglich über einen Teil der Breite der Flugzeugsitzreihe 12a erstreckt. Vorzugsweise weist das Sitzelement 30a eine Sitzbreite 34a von 30 cm bis 120 cm auf. Das Sitzelement 30a weist eine Sitztiefe 36a auf, die einem Passagier komfortabel genug Platz zum Sitzen bietet. Die Sitztiefe 36a des Sitzelements 30a beträgt vorzugsweise 20 cm. Vorzugsweise weist das Sitzelement 30a insbesondere eine Sitztiefe 36a auf, die zwischen 20 cm und 40 cm liegt.

Grundsätzlich ist es denkbar, dass das Sitzelement 30a zusätzlich zu der Schwenkbewegung von der Verstaustellung in seine erste Gebrauchsstellung zusätzlich noch über eine Linearlagerung in einer zweiten, von der Trennwand 26a entfernten Gebrauchsstellung angeordnet sein kann. Eine entsprechende Ausgestaltung ist in der Figur 2 schematisch und gestrichelt angedeutet. Es ist vorzugsweise denkbar, dass das als Bankelement ausgebildete Sitzelement 30a mit seiner der Trennwand 26a zugewandten Kante in einer zweiten Gebrauchsstellung beabstandet zu der Trennwand 26a angeordnet ist und so zumindest in einem Teilbereich ein Freiraum zwischen dem Sitzelement 30a und der Trennwand 26a gebildet ist. Durch den Freiraum kann ein auf dem Sitzelement 30a sitzendes Kind vorzugsweise seine Beine baumeln lassen. Dadurch kann ein Kind vorzugsweise in Richtung der Trennwand 26a ausgerichtet auf dem als Bankelement ausgebildeten Sitzelement 30a sitzen. Grundsätzlich wäre es ebenso denkbar, dass das Sitzelement 30a lediglich über eine Linearlagerung zwischen einer Verstaustellung und zumindest einer ersten Gebrauchsstellung linear verschiebbar wäre. Vorzugsweise könnte das Sitzelement 30a in der Verstaustellung vollständig in eine in der Trennwand 26a vorgesehene Aufnahme aufgenommen sein. Grundsätzlich könnte über eine solche lediglich lineare Führung auch eine zweite Gebrauchsstellung realisiert werden.

Die Flugzeugkabinenvorrichtung umfasst eine Gurtvorrichtung 110a. Die Gurtvorrichtung 110a ist in dem Aufenthaltsbereich 28a angeordnet. Mittels der Gurtvorrichtung 110a kann ein auf dem Sitzelement 30a sitzender Passagier, insbesondere ein auf dem Sitzelement 30a sitzendes Kind, angeschnallt, also auf dem Sitzelement 30a fixiert, werden. Dadurch ist es insbesondere denkbar, dass ein Passagier, insbesondere ein Kind, auch während einer Start- und Landephase oder während Turbulenzen sicher auf dem Sitzelement 30a sitzen kann. Grundsätzlich ist es denkbar, dass die Gurtvorrichtung 110a vorzugsweise als ein einfacher Zweipunktgurt, als ein Dreipunktgurt oder für Kleinkinder als Fünfpunktgurt ausgebildet sein kann.

Die gezeigte Gurtvorrichtung 110a ist als ein Dreipunktgurt ausgebildet. Die Gurtvorrichtung 110a umfasst zwei Schultergurtelemente 112a, 114a. Die Schultergurtelemente 112a, 114a sind an der Trennwand 26a angebunden. Die Schultergurtelemente 112a, 114a sind über eine nicht näher dargestellte Befestigungsstruktur mit der Trennwand 26a verbunden. Die Befestigungsstruktur ist mit einer Stützstruktur der Trennwand 26a verbunden. Dadurch können Kräfte vorteilhaft direkt und sicher über die Stützstruktur in eine Tragstruktur der Flugzeugkabine 10a abgeleitet werden. Die Befestigungsstruktur umfasst einen Höhenverstellmechanismus, über den die Schultergurtelemente 112a, 114a in ihrer Höhe relativ zu dem Sitzelement 30a verstellbar sind. Die Schultergurtelemente 112a, 114a sind über den Höhenverstellmechanismus vorzugsweise in einer vertikalen Richtung, die orthogonal zu dem Kabinenboden ausgerichtet ist, verschiebbar. Die Schultergurtelemente 112a, 114a sind vorzugsweise in unterschiedlichen Höhen zwischen einer maximalen und einer minimalen Höhe arretierbar. Der Höhenverstellmechanismus umfasst ein Betätigungsmittel, über das eine Arretierung der Schultergurtelemente 112a, 114a gelöst werden kann, wodurch ein Passagier die Höhe der Schultergurtelemente 112a, 114a selbst händisch einstellen kann. Der Höhenverstellmechanismus ist dabei vorzugsweise in der Art einer Höhenverstellung eines Fahrzeugkindersitzes ausgebildet, bei der zur Höhenverstellung der Schultergurtelemente 112a, 114a ein Umlenkstab, um den die Schultergurtelemente 112a, 114a geführt sind über eine Linearführung in seiner Höhe verstellbar ist. Die Gurtvorrichtung 110a weist einen Schrittgurt 116a auf. Der Schrittgurt 116a ist unterhalb des Sitzelements 30a angeordnet. Vorzugsweise ist der Schrittgurt 116a an einer tragenden Struktur des Sitzelements 30a angeordnet. Grundsätzlich ist es auch denkbar, dass der Schrittgurt 116a unterhalb des Sitzelements 30a über eine Befestigungsstruktur mit der Trennwand 26a verbunden ist. Die Gurtvorrichtung 110a umfasst ein an dem Schrittgurt 116a befestigtes Gurtschloss 118a. Das Gurtschloss 118a ist verstellbar an dem Schrittgurt 116a befestigt, wodurch insbesondere eine Länge des Schrittgurts 116a anpassbar ist. Grundsätzlich ist es denkbar, dass die Flugzeugkabinenvorrichtung zumindest eine weitere Gurtvorrichtung aufweist, die neben der einen beschriebenen Gurtvorrichtung 110a in dem Aufenthaltsbereich 28a angeordnet ist, wodurch ein weiterer Passagier, insbesondere ein zweites Kind, auf dem Sitzelement 30a angeschnallt werden kann. Durch die Gurtvorrichtung 110a kann ein Passagier, vorzugsweise ein Kind, vorteilhaft auch während einer TTL-Phase auf das Sitzelement 30a gesetzt werden, also auch während der Start- und Landephasen. Durch die Gurtvorrichtung 110a kann das Sitzelement 30a vorteilhaft als vollwertiger Sitz für ein Kind während eines Fluges ausgestaltet werden.

Der Aufenthaltsbereich 28a umfasst ein Aufbewahrungselement 38a. Das Aufbewahrungselement 38a ist als ein flexibles Gewebe oder Netz ausgebildet, das auf einer Unterseite des Sitzelements 30a angeordnet ist. Das Aufbewahrungselement 38a bildet unterhalb des Sitzelements 30a, insbesondere in einer Gebrauchsstellung des Sitzelements 30a, einen Staubereich aus, in dem persönliche Gegenstände von Passagieren, insbesondere von in dem Aufenthaltsbereich 28a befindlichen, oder auf den Flugzeugsitzen 16a, 18a, 20a der ersten Flugzeugsitzreihe 12a sitzenden Passagieren verstaubar sind. Dabei ist es insbesondere denkbar, dass das als Netz oder flexibles Gewebe ausgebildete Aufbewahrungselement 38a an einem hinteren Ende und einem vorderen Ende des Sitzelements 30a an dessen Unterseite fix befestigt ist. Vorzugsweise hängt das Aufbewahrungselement 38a zwischen seiner vorderen und hinteren Befestigung an dem Sitzelement 30a durch und bildet dadurch vorzugsweise einen schlauchförmigen Aufbewahrungsbereich. Grundsätzlich ist es sowohl denkbar, dass der Aufbewahrungsbereich des Aufbewahrungselements 38a lediglich durch seitliche Öffnungen zugänglich ist, als auch, dass auf einer der Flugzeugsitzreihe 12a zugewandten Vorderseite zumindest eine Befüllöffnung vorhanden ist, durch die persönliche Gegenstände in den Aufbewahrungsbereich gebracht und entnommen werden können.

Der Aufenthaltsbereich 28a umfasst ein Fußabstützelement 40a, das vorzugsweise für die Flugzeugsitze 16a, 18a, 20a der ersten Flugzeugsitzreihe 12a vorgesehen ist. Das Fußabstützelement 40a ist vorzugsweise dazu vorgesehen, dass Passagiere, die auf den Flugzeugsitzen 16a, 18a, 20a der ersten Flugzeugsitzreihe 12a sitzen, zumindest in einer Gebrauchsstellung des Sitzelements 30a ihre Füße darauf abstellen können. Das Fußabstützelement 40a ist an einem vorderen Ende des Sitzelements 30a an dessen Unterseite angebracht. Das Fußabstützelement 40a ist als ein Bügelelement ausgebildet. Das Fußabstützelement 40a ist vorzugsweise U-Förmig ausgebildet. Vorzugsweise erstreckt sich das Fußabstützelement 40a über die gesamte Breite des Sitzelements 30a. Das Fußabstützelement 40a ist vorzugsweise starr an der Unterseite des Sitzelements 30a angebracht. Grundsätzlich ist es auch denkbar, dass das Fußabstützelement 40a schwenkbar an der Unterseite des Sitzelements 30a angebracht ist und zur Verstellung des Sitzelements 30a in seine Verstaustellung an das Sitzelement 30a angeklappt werden kann. Vorzugsweise ist es ebenso denkbar, dass das Aufbewahrungselement 38a mit seinem vorderen Ende an dem Fußabstützelement 40a angebunden ist.

Der als Kinderbereich ausgebildete Aufenthaltsbereich 28a umfasst ein Spielgerät 42a. Das Spielgerät 42a ist vorzugsweise insbesondere zu einer Benutzung durch ein in dem Aufenthaltsbereich 28a reisendes Kind vorgesehen. Das Spielgerät 42a ist vorzugsweise insbesondere als ein kindgerechtes Spielzeug ausgebildet. Das Spielgerät 42a ist insbesondere teilweise in die Trennwand 26a integriert. Das Spielgerät 42a ist in dem ersten Ausführungsbeispiel beispielhaft als eine Maltafel ausgebildet. Das als Maltafel ausgebildete Spielgerät 42a ist an der Trennwand 26a angebracht. Das Spielgerät 42a ist insbesondere in einem Bereich oberhalb des Sitzelements 30a angeordnet. Das als Maltafel ausgebildete Spielgerät 42a ist insbesondere von einem Whiteboard gebildet. Das Spielgerät 42a umfasst vorzugsweise Stifte 44a, die verliersicher an dem Spielgerät 42a angebunden sind, mittels denen auf dem als Maltafel ausgebildeten Spielgerät 42a gemalt werden kann. Vorzugsweise ist es ebenso denkbar, dass das als Maltafel ausgebildete Spielgerät 42a magnetisch ausgebildet ist, sodass Magnetelemente daran einfach befestigbar sind. Grundsätzlich ist es auch denkbar, dass das Spielgerät 42a als ein anderes Spielzeug ausgebildet ist. Beispielsweise ist es insbesondere denkbar, dass das Spielgerät 42a von einem Touchscreen ausgebildet ist, auf dem entsprechende kindgerechte Spiele gespielt werden können. Grundsätzlich ist es auch denkbar, dass das Spielgerät 42a als ein anderes mechanisches Spielzeug ausgebildet ist. Grundsätzlich ist es ebenso denkbar, dass der als Kinderbereich ausgebildete Aufenthaltsbereich 28a mehrere Spielgeräte 42a aufweist, die vorzugsweise zumindest teilweise an der Trennwand 26a angebunden sind und/oder in oder an dieser verstaubar sind.

Der als Kinderbereich ausgebildete Aufenthaltsbereich 28a umfasst vorzugsweise ein erstes Trennelement 104a. Das Trennelement 104a ist dazu vorgesehen, den Aufenthaltsbereich 28a von der Bordwand 22a abzutrennen. Das Trennelement 104a ist vorzugsweise von einer gepolsterten Platte ausgebildet, die an der Bordwand 22a in einem kabinenbodennahen Bereich angebracht ist. Vorzugsweise weist der Aufenthaltsbereich 28a ein zweites Trennelement 106a auf. Das zweite Trennelement 106a ist als eine Bespannung ausgebildet. Das zweite Trennelement 106a ist dazu vorgesehen, den Aufenthaltsbereich 28a von dem Kabinengang 24a abzutrennen. Das zweite Trennelement 106a wird vorzugsweise zwischen einer kabinengangseitigen Wandung der Trennwand 26a und dem kabinengangseitigen Flugzeugsitz 16a aufgespannt. Das Trennelement 106a weist vorzugsweise eine Höhe auf, die in etwa einer Höhe des Sitzelements 30a entspricht. Grundsätzlich ist es auch denkbar, dass der Aufenthaltsbereich 28a weitere Trennelemente aufweist, die beispielsweise Zwischenräume unterhalb der Sitzböden der Flugzeugsitze 16a, 18a, 20a verschließen, sodass ein Kind hier nicht hindurch kann. Vorzugsweise weist der als Kinderbereich ausgebildete Aufenthaltsbereich 28a zumindest ein Bodenelement 108a auf. Das Bodenelement 108a ist auf dem Kabinenboden in dem Aufenthaltsbereich 28a ausgelegt. Das Bodenelement 108a erstreckt sich vorzugsweise über einen Großteil des Kabinenbodens in dem Aufenthaltsbereich 28a. Das Bodenelement 108a ist dazu vorgesehen, einen wechselbaren, hygienischen Untergrund für den als Kinderbereich ausgebildeten Aufenthaltsbereich 28a auszubilden. Durch das Bodenelement 108a kann der als Kinderbereich ausgebildete Aufenthaltsbereich 28a, wenn er gebucht wird, einfach mit einem sauberen Boden ausgestattet werden, sodass ein Kind nicht direkt auf dem Kabinenboden sitzen muss. Vorzugsweise ist es denkbar, dass das Bodenelement 108c gepolstert ausgebildet ist. Vorzugsweise weist das Bodenelement 108c eine einfach zu reinigende Oberfläche auf.

Die Flugzeugkabinenvorrichtung umfasst zwei Bildschirmeinheiten 46a, 48a, die oberhalb des Aufenthaltsbereichs 28a in die Trennwand 26a integriert sind. Die Bildschirme sind vorzugsweise insbesondere den Flugzeugsitzen 16a, 18a, 20a der ersten Flugzeugsitzreihe 12a zugeordnet. Die Bildschirmeinheiten 46a, 48a sind vorzugsweise insbesondere dazu vorgesehen, ein In-Flight-Entertainmentsystem darzustellen. Auf den Bildschirmeinheiten 46a, 48a können beispielsweise Flugparameter oder Unterhaltungsmedien dargestellt werden. Vorzugsweise sind die Bildschirmeinheiten 46a, 48a von den Flugzeugsitzen 16a, 18a, 20a der ersten Flugzeugsitzreihe 12a steuerbar. Grundsätzlich ist es ebenso denkbar, dass lediglich eine Bildschirmeinheit 46a, 48a oberhalb des Aufenthaltsbereichs 28a an der Trennwand 26a angeordnet ist, die für alle Flugzeugsitze 16a, 18a, 20a der ersten Flugzeugsitzreihe 12a vorgesehen ist. Grundsätzlich ist es ebenso denkbar, dass jeder Flugzeugsitz 16a, 18a, 20a der ersten Flugzeugsitzreihe 12a eine eigene Bildschirmeinheit 46a, 48a aufweist, die oberhalb des Aufenthaltsbereichs 28a an der Trennwand 26a angeordnet sind.

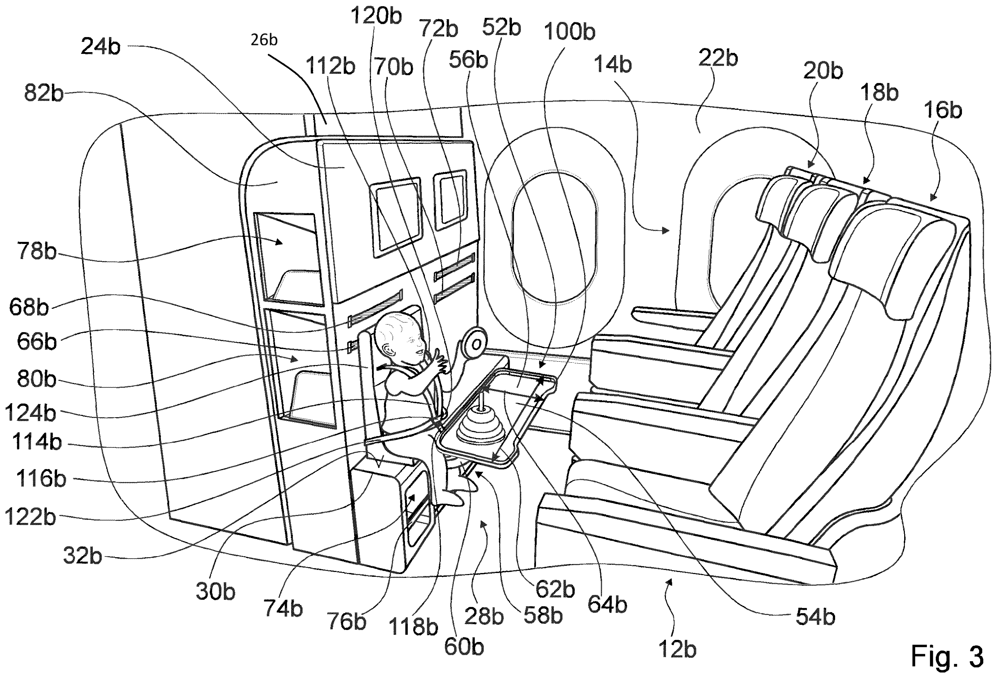

In Fig. 3 bis 5 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 und 2, verwiesen werden kann. Zur Unterscheidung der Ausführungsbeispiele ist der Buchstabe a den Bezugszeichen des Ausführungsbeispiels in Fig. 1 und 2 nachgestellt. In den Ausführungsbeispielen der Fig. 3 bis 5 ist der Buchstabe a durch die Buchstaben b bis d ersetzt.

Die Figur 3 zeigt ein zweites Ausführungsbeispiel einer erfindungsgemäßen Flugzeugkabinenvorrichtung. Die Flugzeugkabinenvorrichtung ist als Teil einer Flugzeugkabine 10b ausgebildet. Die Flugzeugkabinenvorrichtung weist eine erste Flugzeugsitzreihe 12b aus. Die Flugzeugsitzreihe 12b ist als Teil einer Kolonne 14b von hintereinander angeordneten Flugzeugsitzreihen 12b ausgebildet. Die erste Flugzeugsitzreihe 12b umfasst drei Flugzeugsitze 16b, 18b, 20b. Die Flugzeugsitze 16b, 18b, 20b der Flugzeugsitzreihe 12b weisen jeweils eine gleiche Sitzrichtung auf. Die Sitzrichtungen der Flugzeugsitze 16b, 18b, 20b der Flugzeugsitzreihe 12b verlaufen insbesondere parallel zueinander. Die erste Flugzeugsitzreihe 12b ist im Wesentlichen gleich ausgebildet wie die Flugzeugsitzreihe des ersten Ausführungsbeispiels und soll hier deshalb nicht weiter beschrieben werden.

Die Flugzeugkabinenvorrichtung umfasst eine Trennwand 26b. Die Trennwand 26b ist insbesondere unmittelbar vor der ersten Flugzeugsitzreihe 12b angeordnet. Die Flugzeugsitze 16b, 18b, 20b der Flugzeugsitzreihe 12b sind insbesondere auf die Trennwand 26b ausgerichtet. Die Trennwand 26b ragt seitlich von der Bordwand 22b bis zu dem Kabinengang 24b in die Flugzeugkabine 10b hinein. Die Trennwand 26b erstreckt sich vorzugsweise von dem Kabinenboden bis an eine Kabinendecke der Flugzeugkabine 10b. Die Trennwand 26b ist beabstandet zu der ersten Flugzeugsitzreihe 12b angeordnet. Die Trennwand 26b ist beabstandet vor der ersten Flugzeugsitzreihe 12b angeordnet.

Die Flugzeugkabinenvorrichtung umfasst einen Aufenthaltsbereich 28b. Der Aufenthaltsbereich 28b ist als ein Aufenthaltsbereich 28b für wenigstens einen Passagier, insbesondere während eines Fluges vorgesehen. Der Aufenthaltsbereich 28b ist insbesondere zwischen der vordersten Flugzeugsitzreihe 12b und der Trennwand 26b angeordnet. Der Aufenthaltsbereich 28b ist vorzugsweise insbesondere teilweise von der Trennwand 26b ausgebildet. Der Aufenthaltsbereich 28b ist insbesondere als ein Kinderbereich ausgebildet. Der Aufenthaltsbereich 28b ist insbesondere dazu vorgesehen, dass sich Kinder während eines Fluges darin aufhalten können. Der Aufenthaltsbereich 28b bildet vorzugsweise insbesondere zusammen mit zumindest einem Flugzeugsitz 16b, 18b, 20b der Flugzeugsitzreihe 12b einen Familienbereich aus, in dem eine Familie mit zumindest einem Kind zusammen reisen kann. Der als Kinderbereich ausgebildete Aufenthaltsbereich 28b ist insbesondere dazu vorgesehen, dass sich zumindest ein Kind in der Nähe von zumindest einer, insbesondere einer auf einem der Flugzeugsitze 16b, 18b, 20b der ersten Flugzeugsitzreihe 12b sitzenden Begleitperson während eines Fluges aufhalten kann.

Der Aufenthaltsbereich 28b weist ein Sitzelement 30b auf. Das Sitzelement 30b ist dazu vorgesehen, in zumindest einer Stellung einen Sitzplatz für einen Passagier bereitzustellen. Das Sitzelement 30b des als Kinderbereich ausgebildeten Aufenthaltsbereichs 28b ist vorzugsweise insbesondere dazu vorgesehen, einen Sitzplatz für zumindest ein Kind auszubilden. Das Sitzelement 30b ist als ein Bankelement ausgebildet. Das als Bankelement ausgebildete Sitzelement 30b erstreckt sich im Wesentlichen über eine gesamte Breite des Aufenthaltsbereichs 28b. Vorzugsweise weist das als Bankelement ausgebildete Sitzelement 30b eine Sitzfläche 32b auf, die im Wesentlichen die gleichen Maße wie die Sitzfläche des Sitzelements des ersten Ausführungsbeispiels aufweist. Im Gegensatz zu dem ersten Ausführungsbeispiel ist das Sitzelement 30b als ein starres Sitzelement ausgebildet. Das Sitzelement 30b ist als ein starres Bankelement ausgebildet. Das Sitzelement 30b ist stets in einer Gebrauchsstellung angeordnet. Das starre Sitzelement 30b kann nicht zwischen der Gebrauchsstellung und einer Verstaustellung verschoben werden. Das Sitzelement 30b ist von einem starren Bankgrundkörper 50b gebildet. Der Bankgrundkörper 50b ist vorzugsweise an der Trennwand 26b fest angebunden. Grundsätzlich wäre es auch denkbar, dass der Bankgrundkörper 50b einstückig mit der Trennwand 26b ausgebildet ist. Der Bankgrundkörper 50b steht vorzugsweise direkt auf dem Kabinenboden auf. Vorzugsweise werden Kräfte, insbesondere Sitzkräfte, die auf das Sitzelement 30b, also den Bankgrundkörper 50b einwirken, direkt in den Kabinenboden abgeleitet.

Der Aufenthaltsbereich 28b umfasst eine Tischvorrichtung 52b. Die Tischvorrichtung 52b umfasst ein Tischelement 54b. Das Tischelement 54b ist dazu vorgesehen, eine im Wesentlichen ebene Tischoberfläche 56b bereitzustellen, die zumindest von einem Passagier genutzt werden kann, der sich in dem Aufenthaltsbereich 28b aufhält, insbesondere auf dem Sitzelement 30b sitzt. Das Tischelement 54b ist beweglich ausgebildet. Das Tischelement 54b ist insbesondere dazu vorgesehen, zwischen einer Verstaustellung und einer Gebrauchsstellung verstellt zu werden. In der Verstaustellung ist das Tischelement 54b insbesondere so angeordnet, dass es nicht als Tisch genutzt werden kann und keine für einen Passagier benutzbare Tischoberfläche bereitstellt. In der Verstaustellung ist das Tischelement 54b möglichst platzsparend in dem Aufenthaltsbereich 28b verstaut. Vorzugsweise ist das Tischelement 54b in der Verstaustellung insbesondere zumindest teilweise in dem Bankgrundkörper 50b angeordnet und/oder an diesen angeklappt. In der Gebrauchsstellung ist das Tischelement 54b der Tischvorrichtung 52b insbesondere dazu vorgesehen, eine im Wesentlichen ebene Tischoberfläche 56b bereitzustellen. In der Gebrauchsstellung ist die Tischoberfläche 56b vorzugsweise zumindest im Wesentlichen parallel zu dem Kabinenboden ausgerichtet. Grundsätzlich ist es denkbar, dass die Tischoberfläche 56b insbesondere einen Winkel von 3 Grad zu dem Kabinenboden aufweist, um insbesondere eine Neigung des Flugzeugs während eines Normalflugs auszugleichen. In der Gebrauchsstellung ist das Tischelement 54b zwischen dem Sitzelement 30b und den Flugzeugsitzen 16b, 18b, 20b der ersten Flugzeugsitzreihe 12b angeordnet. Vorzugsweise ist das Tischelement 54b in zumindest einer ersten Gebrauchsstellung nah an dem Sitzelement 30b angeordnet, sodass das Tischelement 54b einfach von einem auf dem Sitzelement 30b sitzenden Kind genutzt werden kann. Vorzugsweise ist es grundsätzlich auch denkbar, dass das Tischelement 54b in zumindest einer zweiten Gebrauchsstellung näher an den Flugzeugsitzen 16b, 18b, 20b der ersten Flugzeugsitzreihe 12b angeordnet ist. Dadurch könnte das Tischelement 54b in einer zweiten Gebrauchsstellung vorteilhaft von einem auf einem der Flugzeugsitze 16b, 18b, 20b der ersten Flugzeugsitzreihe 12b sitzenden Passagier genutzt werden.

Das Tischelement 54b ist vorzugsweise zwischen der Verstaustellung und der Gebrauchsstellung verschwenkbar. Zur Verstellung des Tischelements 54b zwischen der Verstaustellung und der Gebrauchsstellung weist die Tischvorrichtung 52b eine Lagervorrichtung 58b auf. Mittels der Lagervorrichtung 58b ist das Tischelement 54b relativ zu dem Sitzelement 30b, insbesondere dem Bankgrundkörper 50b, verstellbar, insbesondere verschwenkbar. Die Lagervorrichtung 58b umfasst einen Lagerarm 60b, mittels dem das Tischelement 54b relativ zu dem Bankgrundkörper 50b verschwenkbar ist. Der Lagerarm 60b ist vorzugsweise fest mit dem Tischelement 54b verbunden. Der Lagerarm 60b ist vorzugsweise mittig an einer Unterseite des Tischelements 54b angeordnet. Der Lagerarm 60b ist über eine Kinematik beweglich mit dem Bankgrundkörper 50b verbunden. Über die nicht näher dargestellte Kinematik kann der Lagerarm 60b zusammen mit dem Tischelement 54b relativ zu dem Bankgrundkörper 50b bewegt, insbesondere verschwenkt werden. Die Tischvorrichtung 52b umfasst eine Verriegelungseinheit, die das Tischelement 54b in der zumindest einen Gebrauchsstellung und in der Verstaustellung fixiert. Grundsätzlich ist es ebenso denkbar, dass die Lagervorrichtung 58b auf eine andere Weise ausgebildet ist und beispielsweise eine andere Anzahl von Lagerarmen 60b und/oder andere Schwenk-, Linear und/oder Rotationslager aufweist, mittels denen das Tischelement 54b zwischen der Verstaustellung und der zumindest einen Gebrauchsstellung bewegbar, vorzugsweise verschwenkbar ist.

Das Tischelement 54b weist vorzugsweise eine Breite 62b auf, die zumindest der Breite eines Flugzeugsitzes 16b, 18b, 20b entspricht. Vorzugsweise weist das Tischelement 54b eine Breite 62b von 30 cm bis 100 cm auf. Grundsätzlich ist es auch denkbar, dass sich das Tischelement 54b über eine gesamte Breite des Sitzelements 30b erstreckt, also eine Breite aufweist, die im Wesentlichen einer Breite der ersten Flugzeugsitzreihe 12b entspricht. Das Tischelement 54b weist eine Tiefe 64b von 20 cm bis 50 cm auf. Die Tiefe 56b des Tischelements 54b ist vorzugsweise so ausgebildet, dass das Tischelement 54b in seiner ersten Gebrauchsstellung einen Abstand von wenigstens 50 cm zu den Flugzeugsitzen 16b, 18b, 20b der ersten Flugzeugsitzreihe 12b aufweist. Das Tischelement 54b weist einen umlaufenden erhöhten Rand 100b auf. Der umlaufende Rand 100 ist dazu vorgesehen, dass Elemente, wie insbesondere Spielsachen des Kindes, nicht so leicht von dem Tischelement 54b fallen können. Der umlaufende erhöhte Rand 100b umschließt die Tischoberfläche 56b vollständig. Der umlaufende Rand 100b ist vorzugsweise flexibel ausgebildet. Der umlaufende Rand 100b weist vorzugsweise zumindest eine Höhe von 5 mm relativ zu der Tischoberfläche 56b auf.

Grundsätzlich ist es auch denkbar, dass die Tischvorrichtung 52b weitere, nicht näher dargestellte Tischelemente aufweist, die beweglich mit dem ersten Tischelement 54b gekoppelt und dazu vorgesehen sind, die Tischoberfläche 56b der Tischvorrichtung 52b in zumindest einer Stellung zu erweitern. Es ist insbesondere vorstellbar, dass die Tischvorrichtung 52b weitere Tischelemente aufweist, die an das Tischelement 54b angeklappt sind und in einer Gebrauchsstellung seitlich oder in Richtung der Flugzeugsitzreihe 12b weg geklappt werden können.

Die Flugzeugkabinenvorrichtung umfasst eine Gurtvorrichtung 110b. Die Gurtvorrichtung 110b ist in dem Aufenthaltsbereich 28b angeordnet. Mittels der Gurtvorrichtung 110b kann ein auf dem Sitzelement sitzender Passagier, insbesondere ein auf dem Sitzelement 30b sitzendes Kind, angeschnallt, also auf dem Sitzelement 30b fixiert werden. Dadurch ist es insbesondere denkbar, dass ein Passagier, insbesondere ein Kind, auch während einer Start- und Landephase oder während Turbulenzen sicher auf dem Sitzelement 30b sitzen kann.

Die gezeigte Gurtvorrichtung 110b ist als ein Fünfpunktgurt ausgebildet. Die Gurtvorrichtung 110b umfasst zwei Schultergurtelemente 112b, 114b. Die Schultergurtelemente 112b, 114b sind an der Trennwand 26b angebunden. Die Schultergurtelemente 112b, 114b sind über eine nicht näher dargestellte Befestigungsstruktur mit der Trennwand 26b verbunden. Die Befestigungsstruktur umfasst einen Höhenverstellmechanismus, über den die Schultergurtelemente 112b, 114b in ihrer Höhe relativ zu dem Sitzelement 30b verstellbar sind. Die Gurtvorrichtung 110b weist drei Schrittgurte 116b, 120b, 122b auf. Die Schrittgurte 116b, 120b, 122b sind unterhalb des Sitzelements 30b angeordnet. Vorzugsweise sind die Schrittgurte 116b, 120b, 122b an einer tragenden Struktur des Sitzelements 30b angeordnet. Die Gurtvorrichtung 110b umfasst ein an dem mittleren Schrittgurt 116b befestigtes Gurtschloss 118b. Das Gurtschloss 118b ist verstellbar an dem Schrittgurt 116b befestigt, wodurch insbesondere eine Länge des Schrittgurts 116b anpassbar ist. Mittels des Gurtschlosses 118b sind die Schultergurtelemente 112b, 114b sowie die Schrittgurte 116b, 120b, 122b miteinander verbindbar. Durch die Gurtvorrichtung 110b kann ein Passagier, vorzugsweise ein Kind, vorteilhaft auch während einer TTL-Phase auf das Sitzelement 30b gesetzt werden, also auch während der Start- und Landephasen. Durch die Gurtvorrichtung 110b kann das Sitzelement 30b vorteilhaft als vollwertiger Sitz für ein Kind während eines Fluges ausgestaltet werden.

Die Flugzeugkabinenvorrichtung umfasst ein Polsterelement 124b, das auf dem Sitzelement 30b angeordnet werden kann. Das Polsterelement 124b ist dazu vorgesehen, einen Sitzbereich für ein auf dem Sitzelement 30b sitzendes Kind zu polstern. Das Polsterelement 124b bildet einen Rückenbereich sowie einen Gesäßbereich aus. Das Polsterelement 124b ist dazu vorgesehen, auf dem Sitzelement 30b befestigt zu werden. Das Polsterelement 124b ist vorzugsweise mittels Flausch- und Hakenbändern auf dem Sitzelement 30b und oder an der Trennwand 26b befestigt. Das Polsterelement 124b weist vorzugsweise in dem Rückenbereich Durchgangsöffnungen auf, durch die die Schultergurtelemente 112b, 114b der Gurtvorrichtung geführt werden können.

Alternativ wäre es auch denkbar, dass die Flugzeugkabinenvorrichtung eine Stützstruktur umfasst, in der das Polsterelement 124b aufgenommen ist. Die Stützstruktur kann beispielsweise als eine Schale ausgebildet sein. Beispielsweise kann die Stützstruktur vorzugsweise als eine Kunststoffschale ausgebildet sein. Die Stützstruktur bildet zusammen mit dem Polsterelement 124b vorzugsweise einen Kindersitz aus. Die Stützstruktur kann über einen Koppelmechanismus fest auf dem Sitzelement 30b angeordnet und vorzugsweise fest mit der Trennwand 26b verbunden werden. Es ist vorzugsweise auch denkbar, dass die Gurtvorrichtung 110b an der Stützstruktur angebunden und in diese integriert ist. Dadurch kann ein Kind besonders vorteilhaft über die Gurtvorrichtung 110b an dem Polsterelement 124b und dadurch auf dem Sitzelement 30b gesichert werden.

Der Aufenthaltsbereich 28b umfasst an der Trennwand 26b angeordnete Befestigungsmittel 66b, 68b, 70b, 72b. Beispielhaft umfasst das Ausführungsbeispiel genau vier Befestigungsmittel 66b, 68b, 70b, 72b, die an der Trennwand 26b angebracht sind. Die Befestigungsmittel 66b, 68b, 70b, 72b sind dazu vorgesehen, dass persönliche Gegenstände im Bereich der Trennwand 26b verliersicher angebracht werden können. Die Befestigungsmittel 66b, 68b, 70b, 72b sind insbesondere als elastische Bänder ausgebildet. Die als elastische Bänder ausgebildeten Befestigungsmittel 66b, 68b, 70b, 72b sind in zwei Paaren jeweils übereinander angebracht. Die Befestigungsmittel 66b, 68b, 70b, 72b sind vorzugsweise jeweils mit ihren beiden Enden fest mit der Trennwand 26b verbunden. Die als elastische Bänder ausgebildeten Befestigungsmittel 66b, 68b, 70b, 72b können durch eine Zugkraft elastisch verformt werden, wodurch ein Aufbewahrungsraum zwischen dem jeweiligen Befestigungsmittel 66b, 68b, 70b, 72b und der Trennwand 26b gebildet werden kann. Die persönlichen Gegenstände können vorzugsweise insbesondere zwischen zumindest einem der Befestigungsmittel 66b, 68b, 70b, 72b, die als elastische Bänder ausgebildet sind, und der Trennwand 26b eingeklemmt werden.

Die Flugzeugkabinenvorrichtung umfasst zumindest ein erstes Verstaufach 74b, das unterhalb des Sitzelements 30b angeordnet ist. Das erste Verstaufach 74b ist vorzugsweise von dem Bankgrundkörper 50b ausgebildet. Das Verstaufach 74b ist in dem Aufenthaltsbereich 28b angeordnet. Das Verstaufach 74b ist vorzugsweise insbesondere als ein Hohlraum in dem Bankgrundkörper 50b ausgebildet. Das Verstaufach 74b weist eine Befüllöffnung auf, die in Richtung der ersten Flugzeugsitzreihe 12b ausgerichtet ist. In der Befüllöffnung des Verstaufachs 74b ist vorzugsweise ein Rückhalteelement 76b angeordnet, das die Befüllöffnung quer durchläuft. Das Rückhalteelement 76b ist insbesondere als ein Steg ausgebildet, der von einem Seitenrand der Befüllöffnung zu einem gegenüberliegenden Rand der Befüllöffnung verläuft. Das Rückhalteelement 76b ist dazu vorgesehen, Gegenstände, die in dem Verstaufach 74b angeordnet sind, an einem Herausfallen zu hindern. Die Flugzeugkabinenvorrichtung weist vorzugsweise zwei weitere Verstaufächer 78b, 80b auf, die an einer Seitenwand 82b der Trennwand 26b angeordnet sind. Die Seitenwand 82b ist als ein parallel zu dem Kabinengang 24b verlaufender Teil der Trennwand 26b ausgebildet. Die Verstaufächer 78b, 80b sind in die Seitenwand 82b integriert. Die Verstaufächer 78b, 80b sind vorzugsweise übereinander angeordnet. Die Verstaufächer 78b, 80b bilden vorzugsweise jeweils einen Hohlraum aus, der von einem Rückhalteelement begrenzt ist. Über eine Befüllöffnung können die Verstaufächer 78b, 80b mit Gegenständen wie beispielsweise Literatur befüllt werden.

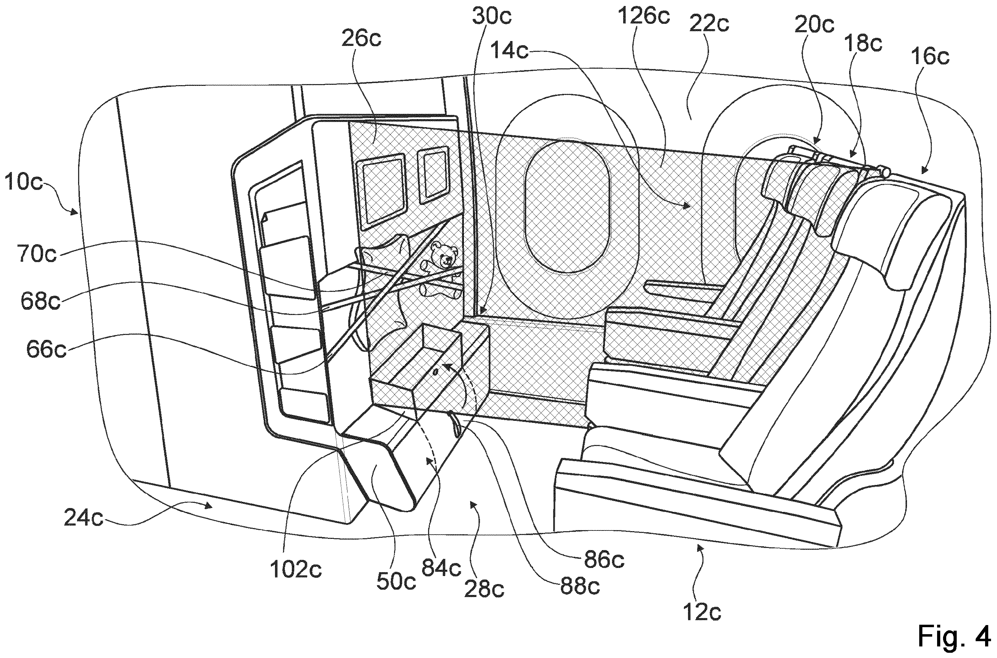

Die Figur 4 zeigt ein drittes Ausführungsbeispiel einer erfindungsgemäßen Flugzeugkabinenvorrichtung. Die Flugzeugskabinenvorrichtung ist als Teil einer Flugzeugkabine 10c ausgebildet. Die Flugzeugkabinenvorrichtung weist eine erste Flugzeugsitzreihe 12c auf. Die Flugzeugsitzreihe 12c ist als Teil einer Kolonne 14c von hintereinander angeordneten Flugzeugsitzreihen ausgebildet. Die erste Flugzeugsitzreihe 12c umfasst drei Flugzeugsitze 16c, 18c, 20c. Die Flugzeugsitze 16c, 18c, 20c der Flugzeugsitzreihe 12c weisen jeweils eine gleiche Sitzrichtung auf. Die Sitzrichtungen der Flugzeugsitze 16c, 18c, 20c der Flugzeugsitzreihe 12c verlaufen insbesondere parallel zueinander. Die erste Flugzeugsitzreihe 12c ist im Wesentlichen gleich ausgebildet wie die Flugzeugsitzreihe des ersten Ausführungsbeispiels und soll hier deshalb nicht weiter beschrieben werden.

Die Flugzeugkabinenvorrichtung umfasst eine Trennwand 26c. Die Trennwand 26c ist insbesondere unmittelbar vor der ersten Flugzeugsitzreihe 12c angeordnet. Die Flugzeugsitze 16c, 18c, 20c der Flugzeugsitzreihe 12c sind insbesondere auf die Trennwand 26c ausgerichtet. Die Trennwand 26c ragt seitlich von der Bordwand 22c bis zu dem Kabinengang 24c in die Flugzeugkabine 10c hinein. Die Trennwand 26c erstreckt sich vorzugsweise von dem Kabinenboden bis an eine Kabinendecke der Flugzeugkabine. Die Trennwand 26c ist beabstandet zu der ersten Flugzeugsitzreihe 12c angeordnet. Die Trennwand 26c ist beabstandet vor der ersten Flugzeugsitzreihe 12c angeordnet.

Die Flugzeugkabinenvorrichtung umfasst einen Aufenthaltsbereich 28c. Der Aufenthaltsbereich 28c ist als ein Aufenthaltsbereich 28c für wenigstens einen Passagier, insbesondere während eines Fluges vorgesehen. Der Aufenthaltsbereich 28c ist insbesondere zwischen der vordersten Flugzeugsitzreihe 12c und der Trennwand 26c angeordnet. Der Aufenthaltsbereich 28c ist vorzugsweise insbesondere teilweise von der Trennwand 26c ausgebildet. Der Aufenthaltsbereich 28c ist insbesondere als ein Kinderbereich ausgebildet. Der Aufenthaltsbereich 28c ist insbesondere dazu vorgesehen, dass sich Kinder während eines Fluges darin aufhalten können. Der Aufenthaltsbereich 28c bildet vorzugsweise insbesondere zusammen mit zumindest einem Flugzeugsitz 16c, 18c, 20c der Flugzeugsitzreihe 12c einen Familienbereich aus, in dem eine Familie mit zumindest einem Kind zusammen reisen können. Der als Kinderbereich ausgebildete Aufenthaltsbereich 28c ist insbesondere dazu vorgesehen, dass sich zumindest ein Kind in der Nähe von zumindest einer, insbesondere einer auf einem der Flugzeugsitze 16c, 18c, 20c der ersten Flugzeugsitzreihe 12c sitzenden Begleitperson während eines Fluges aufhalten kann.

Der Aufenthaltsbereich 28c weist ein Sitzelement 30c auf. Das Sitzelement 30c ist dazu vorgesehen, in zumindest einer Stellung einen Sitzplatz für einen Passagier bereitzustellen. Das Sitzelement 30c des als Kinderbereich ausgebildeten Aufenthaltsbereichs 28c ist vorzugsweise insbesondere dazu vorgesehen, einen Sitzplatz für zumindest ein Kind auszubilden. Das Sitzelement 30c ist als ein Bankelement ausgebildet. Das als Bankelement ausgebildete Sitzelement 30c erstreckt sich im Wesentlichen über eine gesamte Breite des Aufenthaltsbereichs 28c. Vorzugsweise weist das als Bankelement ausgebildete Sitzelement 30c eine Sitzfläche 32c auf, die im Wesentlichen die gleichen Maße wie die Sitzfläche des Sitzelements des ersten Ausführungsbeispiels aufweist. Im Gegensatz zu dem ersten Ausführungsbeispiel ist das Sitzelement 30c als ein starres Sitzelement ausgebildet. Das Sitzelement 30c ist als ein starres Bankelement ausgebildet. Das Sitzelement 30c ist stets in einer Gebrauchsstellung angeordnet. Das starre Sitzelement 30c kann nicht zwischen der Gebrauchsstellung und einer Verstaustellung verschoben werden. Das Sitzelement 30c ist von einem starren Bankgrundkörper 50c gebildet. Der Bankgrundkörper 50c ist vorzugsweise einstückig mit der Trennwand 26c ausgebildet. Der Bankgrundkörper 50c steht vorzugsweise direkt auf dem Kabinenboden auf.

Auf dem Sitzelement 30c kann vorzugsweise ein Baby-Bassinet 102c angeordnet sein. Das Baby-Bassinet 102c ist insbesondere ein für ein Kind ausgebildetes Bettchen. Das Baby-Bassinet 102c weist seitliche Wandungen auf, die das Baby-Bassinet 102c nach außen hin abschließen. Die Wandungen des Baby-Bassinets 102c können dabei insbesondere von einer Bespannung oder einer auf einer Innenseite gepolsterten Platte ausgebildet sein. Vorzugsweise ist es denkbar, dass die Wandungen klappbar an dem Sitzelement 30c angeordnet sind und zur Ausbildung des Baby-Bassinets 102c nach oben geklappt und verriegelt werden können. Grundsätzlich ist es auch denkbar, dass das Baby-Bassinet 102c als ein separates Bauteil ausgebildet ist, das extern verstaut und zum Gebrauch auf dem Sitzelement 30c befestigt werden kann. Das Baby-Bassinet 102c bildet einen Liegebereich für ein Kind, insbesondere ein Kleinkind, aus. Grundsätzlich ist es auch denkbar, dass auf dem Sitzelement 30c vorzugsweise mehrere Baby-Bassinets 102c nebeneinander angeordnet und befestigt werden können. Vorzugsweise können zumindest zwei Baby-Bassinets 102c nebeneinander auf dem Sitzelement 30c fixiert werden.

Der Aufenthaltsbereich 28c umfasst ein Verstaufach 84c. Das Verstaufach 84c ist unterhalb des als Bankelement ausgebildeten Sitzelements 30c angeordnet. Das Verstaufach 84c ist von dem Bankgrundkörper 50c ausgebildet. Das Verstaufach 84c weist einen von dem Bankgrundkörper 50c ausgebildeten Hohlraum auf. Der Hohlraum des Verstaufachs 84c erstreckt sich vorzugsweise über einen wesentlichen Teil einer Breite des Sitzelements 30c. Das Verstaufach 84c weist ein Schließelement 86c auf, mittels dem der Hohlraum des Verstaufachs 84c verschlossen werden kann. Das Schließelement 86c ist als eine schwenkbare Klappe ausgebildet, die an einem oberen Ende des Hohlraums, insbesondere an einem vorderen Ende des Sitzelements 30c angeordnet ist. In einem geschlossenen Zustand verschließt das Schließelement 86c das Verstaufach 84c. In einem geöffneten Zustand des Schließelements 86c ist das Verstaufach 84c geöffnet und auf den Hohlraum des Verstaufachs 84c kann zugegriffen werden. An dem Schließelement 86c ist ein Griffelement 88c angebracht, über das ein Passagier das Schließelement 86c zwischen seiner geschlossenen und geöffneten Stellung verstellen kann.

Der Aufenthaltsbereich 28c umfasst an der Trennwand 26c angeordnete Befestigungsmittel 66c, 68c, 70c. Beispielhaft umfasst das Ausführungsbeispiel genau drei Befestigungsmittel 66c, 68c, 70c, die an der Trennwand 26c angebracht sind. Die Befestigungsmittel 66c, 68c, 70c sind dazu vorgesehen, dass persönliche Gegenstände im Bereich der Trennwand 26c verliersicher angebracht werden können. Die Befestigungsmittel 66c, 68c, 70c sind insbesondere als elastische Bänder ausgebildet. Die Befestigungsmittel 66c, 68c, 70c sind vorzugsweise jeweils mit ihren beiden Enden fest mit der Trennwand 26c verbunden. Die Befestigungsmittel 66c, 68c, 70c sind in unterschiedlichen Ausrichtungen mit der Trennwand 26c verbunden. Die als elastische Bänder ausgebildeten Befestigungsmittel 66c, 68c, 70c können durch eine Zugkraft elastisch verformt werden, wodurch ein Aufbewahrungsraum zwischen dem jeweiligen Befestigungsmittel 66c, 68c, 70c und der Trennwand 26c gebildet werden kann. Die persönlichen Gegenstände können vorzugsweise insbesondere zwischen zumindest einem der Befestigungsmittel 66c, 68c, 70c, die als elastische Bänder ausgebildet sind, und der Trennwand 26c eingeklemmt werden.

Der Aufenthaltsbereich 28c umfasst ein Abtrennelement 126c. Das Abtrennelement 126c ist dazu vorgesehen, zumindest einen Teil des Aufenthaltsbereichs 28c von einem Rest der Flugzeugkabine 10c abzutrennen. Das Abtrennelement 126c ist insbesondere dazu vorgesehen, einen Teil des Aufenthaltsbereichs 28c bis in eine Höhe eines oberen Endes der Flugzeugsitze 16c, 18c, 20c zu begrenzen. Das Abtrennelement 126c ist insbesondere als ein Sichtschutz vorgesehen. Vorzugsweise kann das Abtrennelement 126c auch als ein Infektionsschutzelement ausgebildet sein. Das Abtrennelement 126c ist mit seinem vorderen Ende an der Trennwand 26c angebunden. Das Abtrennelement 126c ist über ein oder mehrere Anbindungselemente fest an der Trennwand 26c angebunden. Mit einem hinteren Ende ist das Abtrennelement 126c an der Flugzeugsitzreihe 12c angebunden. Beispielhaft ist das Abtrennelement 126c in der in Figur 4 gezeigten Ausführung zwischen dem mittleren Flugzeugsitz 18c und dem gangseitigen Flugzeugsitz 16c angeordnet. Dadurch ist mittels des Abtrennelements 126c ein abgetrennter Bereich zwischen den bordwandseitigen Flugzeugsitzen 18c, 20c und der Trennwand 26c gebildet. Grundsätzlich wäre es auch denkbar, das Abtrennelement 126c zwischen dem Flugzeugsitz 16c und dem Kabinengang 24c anzuordnen, oder zwischen dem bordwandseitigen Flugzeugsitz 20c und dem mittleren Flugzeugsitz 18c. Das Abtrennelement 126c ist vorzugsweise von einem undurchsichtigen, flexiblen Material gebildet. Vorzugsweise ist das Abtrennelement 126c von einem Textil gebildet. Beispielsweise kann das Abtrennelement 126c von einem Stoff gebildet sein. Vorzugsweise ist das Abtrennelement 126c an dem vorderen Ende über eine Sicherheitsanbindung mit der Trennwand 26c verbunden. Die Sicherheitsanbindung ist dazu vorgesehen, dass das Abtrennelement 126c in einem Notfall zuverlässig und einfach von der Trennwand 26c gelöst werden kann. Die Sicherheitsanbindung ist dazu vorgesehen, dass das Abtrennelement 126c bei einer definierten Zugkraft von der Trennwand 26c gelöst wird. Die definierte Zugkraft liegt dabei vorteilhaft in einem Bereich von unter 50 N. Dabei ist es denkbar, dass bei einer Zugkraft, die größer ist als die definierte Zugkraft, sich eine Anbindung des Abtrennelements 126c an der Trennwand 26c löst, oder dass das Abtrennelement 126c an einer Soll-Lösestelle, die beispielsweise von einer Reißkante oder von Flausch- und Hakenbändern gebildet sein kann, geteilt wird. Dadurch kann eine Sicherheit vorteilhaft erhöht werden, da das Abtrennelement 126c in einem Notfall schnell und einfach aus einem Fluchtweg entfernt werden kann.

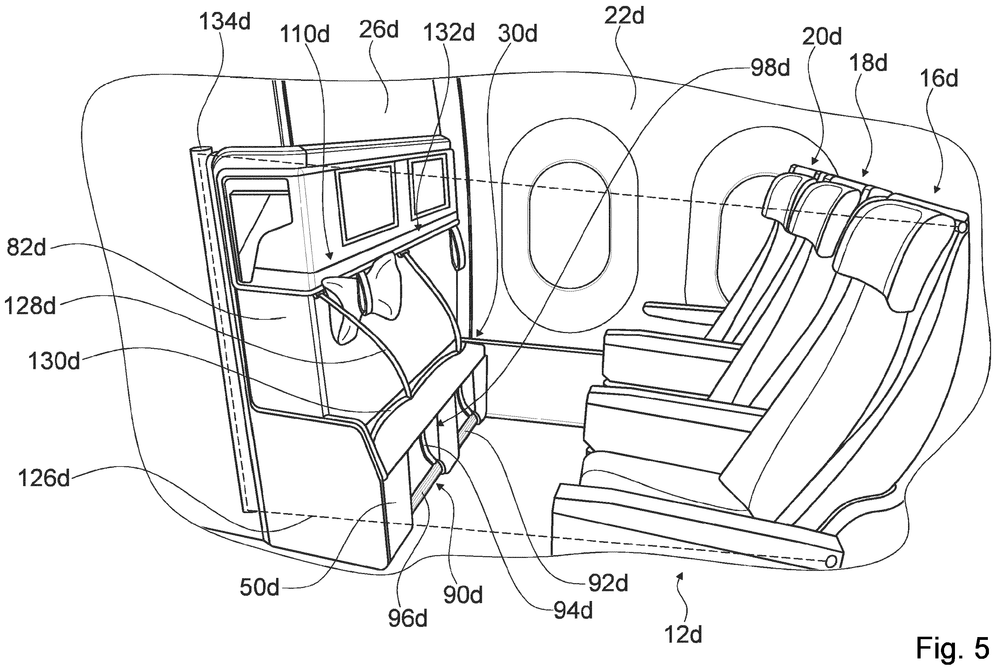

Die Figur 5 zeigt ein viertes Ausführungsbeispiel einer erfindungsgemäßen Flugzeugkabinenvorrichtung. Die Flugzeugskabinenvorrichtung ist als Teil einer Flugzeugkabine 10d ausgebildet. Die Flugzeugkabinenvorrichtung weist eine erste Flugzeugsitzreihe 12d auf. Die Flugzeugsitzreihe 12d ist als Teil einer Kolonne 14d von hintereinander angeordneten Flugzeugsitzreihen ausgebildet. Die erste Flugzeugsitzreihe 12d umfasst drei Flugzeugsitze 16d, 18d, 20d. Die Flugzeugsitze 16d, 18d, 20d der Flugzeugsitzreihe 12d weisen jeweils eine gleiche Sitzrichtung auf. Die Sitzrichtungen der Flugzeugsitze 16d, 18d, 20d der Flugzeugsitzreihe 12d verlaufen insbesondere parallel zueinander. Die erste Flugzeugsitzreihe 12d ist im Wesentlichen gleich ausgebildet wie die Flugzeugsitzreihe des ersten Ausführungsbeispiels und soll hier deshalb nicht weiter beschrieben werden.

Die Flugzeugkabinenvorrichtung umfasst eine Trennwand 26d. Die Trennwand 26d ist insbesondere unmittelbar vor der ersten Flugzeugsitzreihe 12d angeordnet. Die Flugzeugsitze 16d, 18d, 20d der Flugzeugsitzreihe 12d sind insbesondere auf die Trennwand 26d ausgerichtet. Die Trennwand 26d ragt seitlich von der Bordwand 22d bis zu dem Kabinengang 24d in die Flugzeugkabine 10d hinein. Die Trennwand 26d erstreckt sich vorzugsweise von dem Kabinenboden bis an eine Kabinendecke der Flugzeugkabine. Die Trennwand 26d ist beabstandet zu der ersten Flugzeugsitzreihe 12d angeordnet. Die Trennwand 26d ist beabstandet vor der ersten Flugzeugsitzreihe 12d angeordnet.

Die Flugzeugkabinenvorrichtung umfasst einen Aufenthaltsbereich 28d. Der Aufenthaltsbereich 28d ist als ein Aufenthaltsbereich 28d für wenigstens einen Passagier, insbesondere während eines Fluges vorgesehen. Der Aufenthaltsbereich 28d ist insbesondere zwischen der vordersten Flugzeugsitzreihe 12d und der Trennwand 26d angeordnet. Der Aufenthaltsbereich 28d ist vorzugsweise insbesondere teilweise von der Trennwand 26d ausgebildet. Der Aufenthaltsbereich 28d ist insbesondere als ein Erwachsenen- und Business-Bereich ausgebildet. Der Aufenthaltsbereich 28d ist insbesondere dazu vorgesehen, dass sich Erwachsene während eines Fluges darin aufhalten können.

Der Aufenthaltsbereich 28d weist ein Sitzelement 30d auf. Das Sitzelement 30d ist dazu vorgesehen, in zumindest einer Stellung einen Sitzplatz für einen Passagier bereitzustellen. Das Sitzelement 30d des als Business- oder Kommunikationsbereich ausgebildeten Aufenthaltsbereichs 28d ist vorzugsweise insbesondere dazu vorgesehen, einen Sitzplatz für zumindest einen Erwachsenen auszubilden. Das Sitzelement 30d ist als ein Bankelement ausgebildet. Das als Bankelement ausgebildete Sitzelement 30d erstreckt sich im Wesentlichen über eine gesamte Breite des Aufenthaltsbereichs 28d. Vorzugsweise weist das als Bankelement ausgebildete Sitzelement 30d eine Sitzfläche 32d auf, die im Wesentlichen die gleichen Maße aufweist wie die Sitzfläche des Sitzelements des ersten Ausführungsbeispiels. Im Gegensatz zu dem ersten Ausführungsbeispiel ist das Sitzelement 30d als ein starres Sitzelement ausgebildet. Das Sitzelement 30d ist als ein starres Bankelement ausgebildet. Das Sitzelement 30d ist stets in einer Gebrauchsstellung angeordnet. Das starre Sitzelement 30d kann nicht zwischen der Gebrauchsstellung und einer Verstaustellung verschoben werden. Das Sitzelement 30d ist von einem starren Bankgrundkörper 50d gebildet. Der Bankgrundkörper 50d ist vorzugsweise einstückig mit der Trennwand 26d ausgebildet. Der Bankgrundkörper 50d steht vorzugsweise direkt auf dem Kabinenboden auf. Grundsätzlich wäre es natürlich auch denkbar, dass der als Business- oder Kommunikationsbereich ausgebildete Aufenthaltsbereich 28d ebenfalls eine Tischeinheit mit einem Tischelement umfasst, der zum gemeinsamen Essen und/oder Arbeiten auf dem Sitzelement 30d und den Flugzeugsitzen 16d, 18d, 20d genutzt werden kann.

Die Flugzeugkabinenvorrichtung umfasst verstellbare Fußablageelemente 90d, 92d. Die zwei verstellbaren Fußablageelemente 90d, 92d sind unterhalb des Sitzelements 30d angeordnet. In dieser Ausführungsform weist die Flugzeugkabinenvorrichtung genau zwei Fußablageelemente 90d, 92d, insbesondere für die zwei äußeren Flugzeugsitze 16d, 20d auf. Grundsätzlich ist es auch denkbar, dass die Flugzeugkabinenvorrichtung für jeden der Flugzeugsitze 16d, 18d, 20d ein eigenes Fußablageelement 90d, 92d, also insbesondere drei Fußablageelemente 90d, 92d umfasst. Die Fußablageelemente 90d, 92d sind im Wesentlichen gleich ausgebildet, weswegen im Folgenden lediglich das Fußablageelement 90d näher beschrieben wird. Das Fußablageelement 90d ist als ein schwenkbarer Bügel ausgebildet. Das als Bügel ausgebildete Fußablageelement 90d weist zwei seitliche Tragarme 94d und ein Fußtrittelement 96d auf, das die beiden Tragarme 94d an einem vorderen Ende miteinander verbindet. Das Fußtrittelement 96d ist vorzugsweise drehbar mit den Tragarmen 94d verbunden. Das Fußtrittelement 96d ist dazu vorgesehen, dass ein Passagier seinen Fuß darauf abstellen kann. Die Tragarme 94d sind mit einem hinteren Ende jeweils gelenkig mit dem Bankgrundkörper 50d verbunden. Der Bankgrundkörper 50d weist eine erste Fußablageausnehmung 98d auf, in der das Fußablageelement 90d in einer Verstaustellung angeordnet ist. Die Fußablageausnehmung 98d ist als ein Hohlraum in dem Bankgrundkörper 50d, insbesondere unterhalb des Sitzelements 30d ausgebildet. Die Tragarme 94d sind mit ihrem hinteren Ende jeweils über ein Rotationslager an einem hinteren, oberen Ende der Fußablageausnehmung 98d an den Bankgrundkörper 50d angebunden. Ein Passagier kann das Fußablageelement 90d aus der Fußablageausnehmung 98d für eine Benutzung herausschwenken. Vorzugsweise ist das Fußablageelement 90d insbesondere in verschiedenen Winkelstellungen arretierbar.

Die Flugzeugkabinenvorrichtung umfasst eine Gurtvorrichtung 110d. Die Gurtvorrichtung 110d ist in dem Aufenthaltsbereich 28d angeordnet. Mittels der Gurtvorrichtung 110d kann ein auf dem Sitzelement 30d sitzender Passagier angeschnallt, also auf dem Sitzelement 30d fixiert werden. Dadurch ist es insbesondere denkbar, dass ein Passagier, insbesondere ein Kind, auch während einer Start- und Landephase oder während Turbulenzen sicher auf dem Sitzelement 30d sitzen kann. Die Gurtvorrichtung 110d ist als ein Dreipunktgurt ausgebildet. Die Gurtvorrichtung 110d ist ähnlich einer Kraftfahrzeuggurtvorrichtung ausgebildet. Die Gurtvorrichtung 110d umfasst einen Schultergurt 128d. Der Schultergurt 128d ist an der Trennwand 26d angebunden. Der Schultergurt 128d ist über einen Gurtaufrollmechanismus aufrollbar an der Trennwand 26d angebunden. In einem unbenutzten Zustand kann der Schultergurt 128d eingerollt werden. Die Gurtvorrichtung 110d weist einen Beckengurt 130d auf. Der Beckengurt ist auf einer ersten Seite fest mit einer Tragstruktur des Sitzelements 30d verbunden. An einem zweiten Ende des Beckengurts 130d ist der Beckengurt 130d mit dem Schultergurt 128d gekoppelt und gemeinsam über ein Gurtschloss an der Tragstruktur des Sitzelements 30d anbindbar. Die Flugzeugkabinenvorrichtung umfasst eine weitere Gurtvorrichtung 132d, die gleich ausgebildet ist wie die Gurtvorrichtung 110d. Mittels der beiden Gurtvorrichtungen 110d, 132d können Passagiere auf dem Sitzelement 30d angeschnallt werden und dadurch auch in TTL-Situationen auf dem Sitzelement 30d sicher sitzen.

Der Aufenthaltsbereich 28d umfasst ein Abtrennelement 126d. Das Abtrennelement 126d ist dazu vorgesehen, den Aufenthaltsbereich 28d von einem Rest der Flugzeugkabine 10d abzutrennen. Das Abtrennelement 126d ist insbesondere dazu vorgesehen, den Aufenthaltsbereich 28d bis in eine Höhe eines oberen Endes der Flugzeugsitze 16d, 18d, 20d zu begrenzen. Das Abtrennelement 126d ist insbesondere als ein Sichtschutz vorgesehen. Vorzugsweise kann das Abtrennelement 126d auch als ein Infektionsschutzelement ausgebildet sein. Das Abtrennelement 126d ist mit seinem vorderen Ende an der Trennwand 26d angebunden. Das Abtrennelement 126d ist als ein Rollo ausgebildet. Das Abtrennelement 126d ist mit seinem vorderen Ende in einer Aufrollvorrichtung 134d aufrollbar gelagert. Die Aufrollvorrichtung 134d ist an der Trennwand 26d fest angebunden. Die Aufrollvorrichtung ist an einer Seitenwand 82d der Trennwand 26d angebunden. An einem hinteren Ende ist das Abtrennelement 126d in einem ausgerollten Zustand an einem Außenbereich des Flugzeugsitzes 16d befestigbar. Das Abtrennelement 126d ist vorzugsweise von einem undurchsichtigen, flexiblen Material gebildet. Vorzugsweise ist das Abtrennelement 126d von einem Textil gebildet. Beispielsweise kann das Abtrennelement 126d von einem Stoff gebildet sein.

Vorzugsweise ist es denkbar, dass in dem Aufenthaltsbereich 28d weitere Elemente angeordnet sind, die insbesondere dazu vorgesehen sind, eine geschäftliche Unterhaltung zu unterstützen. Insbesondere können IT-Anschlüsse vorgesehen sein, mittels denen beispielsweise Computer an eine Stromversorgung angeschlossen werden können. Vorzugsweise ist es insbesondere denkbar, dass beispielsweise ein Mülleimer, vorzugsweise ein schließbarer Mülleimer, in die Trennwand 26d integriert ist.

### Bezugszeichen

- 10: Flugzeugkabine
- 12: Flugzeugsitzreihe
- 14: Kolonne
- 16: Flugzeugsitz
- 18: Flugzeugsitz
- 20: Flugzeugsitz
- 22: Bordwand
- 24: Kabinengang
- 26: Trennwand
- 28: Aufenthaltsbereich
- 30: Sitzelement
- 32: Sitzfläche
- 34: Sitzbreite
- 36: Sitztiefe
- 38: Aufbewahrungselement
- 40: Fußabstützelement
- 42: Spielgerät
- 44: Stifte
- 46: Bildschirmeinheit
- 48: Bildschirmeinheit
- 50: Bankgrundkörper
- 52: Tischvorrichtung
- 54: Tischelement
- 56: Tischoberfläche
- 58: Lagervorrichtung
- 60: Lagerarm
- 62: Breite
- 64: Tiefe
- 66: Befestigungsmittel
- 68: Befestigungsmittel
- 70: Befestigungsmittel
- 72: Befestigungsmittel
- 74: Verstaufach
- 76: Rückhalteelement
- 78: Verstaufach
- 80: Verstaufach
- 82: Seitenwand
- 84: Verstaufach
- 86: Schließelement
- 88: Griffelement
- 90: Fußablageelement
- 92: Fußablageelement
- 94: Tragarm
- 96: Fußtrittelement
- 98: Fußablageausnehmung
- 100: Umlaufender Rand
- 102: Baby-Bassinet
- 104: Trennelement
- 106: Trennelement
- 108: Bodenelement
- 110: Gurtvorrichtung
- 112: Schultergurtelement
- 114: Schultergurtelement
- 116: Schrittgurt
- 118: Gurtschloss
- 120: Schrittgurt
- 122: Schrittgurt
- 124: Polsterelement
- 126: Abtrennelement
- 128: Schultergurt
- 130: Beckengurt
- 132: Gurtvorrichtung
- 134: Aufrollvorrichtung

## Patentansprüche

1. Flugzeugkabinenvorrichtung mit wenigstens einer ersten Flugzeugsitzreihe (12a; 12b; 12c; 12d), die zumindest drei unmittelbar nebeneinander und parallel zueinander ausgerichtete Flugzeugsitze (16a, 18a, 20a; 16b, 18b, 20b; 16c, 18c, 20c; 16d, 18d, 20d) aufweist, die in eine gleiche Sitzrichtung ausgerichtet sind, mit einer unmittelbar vor der ersten Flugzeugsitzreihe (12a; 12b; 12c; 12d) angeordneten Trennwand (26a; 26b; 26c; 26d), und mit zumindest einem Aufenthaltsbereich (28a; 28b; 28c; 28d), der zumindest teilweise an der Trennwand (26a; 26b; 26c; 26d) angeordnet ist und wenigstens ein Sitzelement (30a; 30b; 30c; 30d) aufweist, das dazu vorgesehen ist, einen Sitzplatz für mindestens einen Passagier auszubilden, wobei das Sitzelement (30a; 30b; 30c; 30d) als Bankelement ausgebildet ist, wobei der Aufenthaltsbereich (28a) in Richtung des Kabinengangs, in Richtung der Bordwand und/oder in Richtung der Flugzeugsitzreihe zumindest ein Trennelement (104a, 106a) aufweist, das dazu vorgesehen ist, den Aufenthaltsbereich (28a) zumindest teilweise zu begrenzen, oder ein Abtrennelement (126c; 126d) aufweist, welches mit seinem vorderen Ende an der Trennwand (26c; 26d) angebunden und mit einem hinteren Ende an der Flugzeugsitzreihe (12c; 12d) angebunden ist.

2. Flugzeugkabinenvorrichtung nach Anspruch 1, **dadurch gekennzeichnet, dass** der Aufenthaltsbereich (28a; 28b; 28c) als ein Kinderbereich ausgebildet ist.

3. Flugzeugkabinenvorrichtung nach Anspruch 2, **dadurch gekennzeichnet, dass** der als Kinderbereich ausgebildete Aufenthaltsbereich (28a; 28b; 28c) wenigstens ein Spielgerät (42a) umfasst, das zumindest teilweise in die Trennwand (26a) integriert ist.

4. Flugzeugkabinenvorrichtung nach einem der vorhergehenden Ansprüche, **dadurch gekennzeichnet, dass** der Aufenthaltsbereich (28b) eine Tischvorrichtung (52b) mit wenigstens einem Tischelement (54b) umfasst, das zwischen einer Verstaustellung und zumindest einer Gebrauchsstellung verstellbar ist.

5. Flugzeugkabinenvorrichtung nach Anspruch 4, **dadurch gekennzeichnet, dass** die Tischvorrichtung (52b) wenigstens eine Lagervorrichtung (58b) aufweist, mittels der das Tischelement (54b) zwischen seiner unter dem Sitzelement (30b) angeordneten Verstaustellung und seiner vor dem Sitzelement (30b) angeordneten Gebrauchsstellung verstellbar, insbesondere verschwenkbar ist.

6. Flugzeugkabinenvorrichtung nach Anspruch 4 oder 5, **dadurch gekennzeichnet, dass** das Tischelement (54b) in zumindest einer Gebrauchsstellung von zumindest einem Flugzeugsitz (16b, 18b, 20b) der ersten Flugzeugsitzreihe (12b) benutzbar ist.

7. Flugzeugkabinenvorrichtung nach einem der vorhergehenden Ansprüche, **dadurch gekennzeichnet, dass** der Aufenthaltsbereich (28b; 28c) zumindest ein an der Trennwand (26b; 26c) angeordnetes Befestigungsmittel (66b, 68b, 70b, 72b; 66c, 68c, 70c) umfasst, mittels dem persönliche Gegenstände im Bereich der Trennwand (26b; 26c) verliersicher angebracht werden können.

8. Flugzeugkabinenvorrichtung nach einem der vorhergehenden Ansprüche, **dadurch gekennzeichnet, dass** der Aufenthaltsbereich (28c) zumindest ein Verstaufach (78c) aufweist, das in dem Sitzelement (30c) angeordnet ist.

9. Flugzeugkabinenvorrichtung nach einem der vorhergehenden Ansprüche, **gekennzeichnet durch** zumindest ein verstellbares Fußablageelement (90d, 92d), das für zumindest einen Flugzeugsitz (16d, 18d, 20d) der Flugzeugsitzreihe (12d) vorgesehen ist und unterhalb des Sitzelements (30d) des Aufenthaltsbereichs (28d) angeordnet ist.

10. Flugzeugkabinenvorrichtung nach einem der vorhergehenden Ansprüche, **gekennzeichnet durch** zumindest eine Bildschirmeinheit (46a, 48a), die oberhalb des Aufenthaltsbereichs (28a) in die Trennwand (26a) integriert ist.

11. Flugzeugkabinenvorrichtung nach Anspruch 10, **dadurch gekennzeichnet, dass** das Trennelement (104a, 106a) gepolstert ausgebildet ist.

## Claims

1. Aircraft cabin device
having at least one first aircraft seat row (12a; 12b; 12c; 12d) comprising at least three aircraft seats (16a, 18a, 20a; 16b, 18b, 20b; 16c, 18c, 20c; 16d, 18d, 20d), which are aligned directly next to one another and parallel to one another and which are aligned in the same sitting direction,
having a partition wall (26a; 26b; 26c; 26d), which is arranged directly in front of the first aircraft seat row (12a; 12b; 12c; 12d),
and having at least one occupancy region (28a; 28b; 28c; 28d), which is arranged at least partially at the partition wall (26a; 26b; 26c; 26d) and has at least one seat element (30a; 30b; 30c; 30d), which is provided to form a seat for at least one passenger, wherein the seat element (30a; 30b; 30c; 30d) is realized as a bench element,
wherein the occupancy region (28a) has, in the direction of the cabin aisle, in the direction of the side wall and/or in the direction of the aircraft seat row, at least one separating element (104a, 106a), which is configured to at least partially delimit the occupancy region (28a), or has a partition element (126c; 126d), which is connected by way of its front end to the partition wall (26c; 26d) and is connected by way of a rear end to the aircraft seat row (12c; 12d).

2. Aircraft cabin device according to claim 1, **characterized in that** the occupancy region (28a; 28b; 28c) is realized as a children's region.

3. Aircraft cabin device according to claim 2, **characterized in that** the occupancy region (28a; 28b; 28c), which is realized as a children's region, comprises at least one playing device (42a), which is integrated at least partially into the partition wall (26a).

4. Aircraft cabin device according to any one of the preceding claims, **characterized in that** the occupancy region (28b) comprises a table device (52b) having at least one table element (54b) which is adjustable between a stowed position and at least one use position.

5. Aircraft cabin device according to claim 4,
**characterized in that** the table device (52b) has at least one support device (58b), by means of which the table element (54b) is adjustable, in particular pivotable, between its stowed position, which is arranged below the seat element (30b), and its use position, which is arranged in front of the seat element (30b).

6. Aircraft cabin device according to claim 4 or 5,
**characterized in that** the table element (54b) is in at least one use position usable from at least one aircraft seat (16b, 18b, 20b) of the first aircraft seat row (12b).

7. Aircraft cabin device according to any one of the preceding claims, **characterized in that** the occupancy region (28b; 28c) comprises at least one fastening means (66b, 68b, 70b, 72b; 66c, 68c, 70c), which is arranged on the partition wall (26b; 26c) and by means of which personal objects can be attached in a loss-proof manner in the region of the partition wall (26b; 26c).

8. Aircraft cabin device according to any one of the preceding claims, **characterized in that** the occupancy region (28c) has at least one stowage compartment (78c), which is arranged in the seat element (30c).

9. Aircraft cabin device according to any one of the preceding claims, **characterized by** at least one adjustable footrest element (90d, 92d), which is configured for at least one aircraft seat (16d, 18d, 20d) of the aircraft seat row (12d) and is arranged below the seat element (30d) of the occupancy region (28d).

10. Aircraft cabin device according to any one of the preceding claims, **characterized by** at least one screen unit (46a, 48a), which is integrated in the partition wall (26a) above the occupancy region (28a).

11. Aircraft cabin device according to claim 10,
**characterized in that** the separating element (104a, 106a) is realized in a padded manner.

## Revendications

1. Dispositif de cabine d'avion
avec au moins une première rangée de sièges d'avion (12a ; 12b ; 12c ; 12d) comprenant au moins trois sièges d'avion (16a, 18a, 20a ; 16b, 18b, 20b ; 16c, 18c, 20c ; 16d, 18d, 20d) qui sont orientés l'un directement à côté de l'autre et l'un parallèlement à l'autre et sont orientés dans une même direction d'assise, avec une cloison de séparation (26a ; 26b ; 26c ; 26d) disposée directement devant la première rangée de sièges d'avion (12a ; 12b ; 12c ; 12d)
et avec au moins une zone de séjour (28a ; 28b ; 28c ; 28d) qui est disposée au moins en partie à la cloison de séparation (26a ; 26b ; 26c ; 26d) et comprend au moins un élément-siège (30a ; 30b ; 30c ; 30d) conçu pour former une place assise pour au moins un passager, l'élément-siège (30a ; 30b ; 30c ; 30d) étant réalisé sous forme d'élément-banc,
où la zone de séjour (28a) comprend, dans la direction de l'allée de cabine, dans la direction de la paroi latérale et/ou dans la direction de la rangée de sièges d'avion, au moins un élément de séparation (104a, 106a) prévu pour délimiter au moins en partie la zone de séjour (28a) ou un élément de cloisonnement (126c ; 126d) relié par son extrémité avant à la cloison de séparation (26c ; 26d) et relié par une extrémité arrière à la rangée de sièges d'avion (12c ; 12d).

2. Dispositif de cabine d'avion selon la revendication 1,
**caractérisé en ce que** la zone de séjour (28a ; 28b ; 28c) est réalisée comme zone pour enfants.

3. Dispositif de cabine d'avion selon la revendication 2,
**caractérisé en ce que** la zone de séjour (28a ; 28b ; 28c) réalisée comme zone pour enfants comprend au moins un appareil de jeu (42a) intégré au moins en partie dans la cloison de séparation (26a).

4. Dispositif de cabine d'avion selon l'une quelconque des revendications précédentes,
**caractérisé en ce que** la zone de séjour (28b) comprend un dispositif de table (52b) avec au moins un élément de table (54b) qui est réglable entre une position de rangement et au moins une position d'utilisation.

5. Dispositif de cabine d'avion selon la revendication 4,
**caractérisé en ce que** le dispositif de table (52b) comprend au moins un dispositif de support (58b) moyennant lequel l'élément de table (54b) est réglable, en particulier pivotable, entre sa position de rangement située sous l'élément-siège (30b) et sa position d'utilisation située devant l'élément-siège (30b).

6. Dispositif de cabine d'avion selon la revendication 4 ou 5,
**caractérisé en ce que** l'élément de table (54b) peut être utilisé dans au moins une position d'utilisation par au moins un siège d'avion (16b, 18b, 20b) de la première rangée de sièges d'avion (12b).

7. Dispositif de cabine d'avion selon l'une quelconque des revendications précédentes,
**caractérisé en ce que** la zone de séjour (28b ; 28c) comprend au moins un moyen de fixation (66b, 68b, 70b, 72b ; 66c, 68c, 70c) qui est disposé sur la cloison de séparation (26b ; 26c) et moyennant lequel des objets personnels peuvent être montés de manière imperdable dans la zone de la cloison de séparation (26b ; 26c).

8. Dispositif de cabine d'avion selon l'une quelconque des revendications précédentes,
**caractérisé en ce que** la zone de séjour (28c) comprend au moins un compartiment de rangement (78c) disposé dans l'élément-siège (30c).

9. Dispositif de cabine d'avion selon l'une quelconque des revendications précédentes,
**caractérisé par** au moins un élément repose-pieds réglable (90d, 92d) qui est conçu pour au moins un siège d'avion (16d, 18d, 20d) de la rangée de sièges d'avion (12d) et est disposé au-dessous de l'élément-siège (30d) de la zone de séjour (28d).

10. Dispositif de cabine d'avion selon l'une quelconque des revendications précédentes,
**caractérisé par** au moins une unité d'écran (46a, 48a) intégrée dans la cloison de séparation (26a) au-dessus de la zone de séjour (28a).

11. Dispositif de cabine d'avion selon la revendication 10,
**caractérisé en ce que** l'élément de séparation (104a, 106a) est réalisé de manière rembourrée.
